# EUROPÄISCHE PATENTSCHRIFT

(11) **EP 3 718 729 B1**
(45) Veröffentlichungstag und Bekanntmachung des Hinweises auf die Patenterteilung: **04.10.2023**
(21) Anmeldenummer: 19166901.9
(22) Anmeldetag: 02.04.2019
(51) Int. Cl.: B29C 43/00, B29C 64/153, B22F 3/105, B22F 3/12, B22F 3/15, B22F 3/24, B29C 64/40, B33Y 10/00, B33Y 40/20, B22F 10/28, B22F 10/36, B22F 10/366, B22F 10/64, B22F 10/80, B29C 35/08, B29C 43/10

(54) **FERTIGUNGSVERFAHREN MIT ADDITIVER BAUTEILHERSTELLUNG UND NACHBEARBEITUNG**
PRODUCTION METHOD WITH ADDITIVE COMPONENT MANUFACTURE AND FINISHING
PROCÉDÉ DE FABRICATION À FABRICATION ADDITIVE DE COMPOSANTS ET TRAITEMENT ULTÉRIEUR

(43) Veröffentlichungstag der Anmeldung: 07.10.2020
(73) Patentinhaber: OWL AM Additive Manufacturing GmbH, 33818 Leopoldshöhe (DE)
(72) Erfinder: HOFFMANN, Raphael, 33818 Leopoldshöhe (DE); HOFFMANN, Markus, 33818 Leopoldshöhe (DE)
(74) Vertreter: Eisenführ Speiser

(56) Entgegenhaltungen:
- CN-A- 107 234 240
- US-A1- 2015 093 283
- US-A1- 2018 154 439
- HANY HASSANIN ET AL: "Net-shape manufacturing using hybrid selective laser melting/hot isostatic pressing", RAPID PROTOTYPING JOURNAL, Bd. 23, Nr. 4, 20. Juni 2017 (2017-06-20), Seiten 720-726, XP055497185, GB ISSN: 1355-2546, DOI: 10.1108/RPJ-02-2016-0019
- K Lappo: "Discrete Multiple Material Selective Laser Sintering (M^2SLS): Experimental Study of Part Processing", , 19. August 2003 (2003-08-19), XP055624808, Gefunden im Internet: URL:http://edge.rit.edu/content/P10551/pub lic/SFF/SFF%202003%20Proceedings/2003%20SF F%20Papers/10-Lappo.pdf [gefunden am 2019-09-20]

## Beschreibung

Die Erfindung betrifft ein Verfahren zur Herstellung von Bauteilen in einem additiven Herstellungsverfahren.

Additive Herstellungsverfahren sind Produktionsverfahren, bei denen ein Bauteil datengesteuert durch punktweise, linienweise oder flächenweise Erzeugung von Produktabschnitten durch Aneinanderfügen dieser Bauteilabschnitte bei deren Herstellung aufgebaut wird. Additive Herstellungsverfahren zeichnen sich dadurch aus, dass das Produkt punktweise, linienweise oder schichtweise aufgebaut wird und hierbei dem Produktmaterial während des Herstellungsverfahrens hinzugefügt wird. Demgegenüber wird bei maschinellen Herstellungsverfahren wie beispielsweise Fräsen, Drehen oder Erodieren aus einem Halbzeug das Produkt durch Entfernen von Material hergestellt.

Additive Herstellungsverfahren im Sinne der Erfindung lassen sich unterschiedlich klassifizieren. Eine erste Klassifikation erfolgt nach dem verwendeten Ausgangsmaterial, das beispielsweise pulverförmig oder flüssig sein kann, einzelne additive Herstellungsverfahren verwenden auch feste Halbzeugprodukte wie Fasern oder Stäbe, die im Zuge des Herstellungsverfahrens aufgeschmolzen werden, um sie zu verarbeiten. Typischerweise liegt das Ausgangsmaterial in einem fließfähigen Zustand während des additiven Herstellungsverfahrens vor und kann in diesem fließfähigen Zustand an den selektiven Ort des Produkts gebracht werden, um dann dort ausgehärtet zu werden, beispielswiese durch eine chemische Reaktion, ein Aufschmelzen und erstarren. Eine andere Klassifikation gruppiert die additiven Herstellungsverfahren nach der Systematik des Aufbauvorgangs. Hier sind beispielsweise schichtweise Herstellungsverfahren gebräuchlich, bei denen ein flüssiges oder pulverförmiges Material als Schicht selektiv in der Schichtebene ausgehärtet und mit der darunterliegenden Schicht verbunden wird, und auf diese Weise in einem wiederholenden Schichtaufbauvorgang das Produkt hergestellt wird. Bei diesen Verfahren kann das Material zunächst als vollständige Schicht aufgetragen werden und danach selektiv Teile dieser Schicht durch Energieeinwirkung (z.B. mittels Laser oder Elektronenstrahl) versintert oder geschmolzen werden, um hierdurch eine Aushärtung und Verbindung selektiv zu bewirken. Es kann auch zunächst eine erste Materialkomponente als Schicht aufgetragen werden und darauffolgend selektiv in Teilbereichen dieser Schicht eine zweite Materialkompoinente aufgetragen werden. Diese zweite Materialkomponente kann unmittelbar zu einer Aushärtung und Verbindung führen, oder dies kann durch nachfolgende Energieeinwirkung oder chemische Einwirkung erfolgen.

Von der Erfindung umfasste Verfahren sind beispielsweise begrifflich als Selektives Laserschmelzen, Selektives Lasersintern, selective heat sintering, binder jetting, Elektronenstrahlschmelzen, fused deposition modeling, wax deposition modeling, contour crafting, metal powder application, Elektronenstrahlschweißen, Stereolithographie, digitial light processing, liquid composite molding, laminated object modeling oder 3D-Druck bekannt. Einige der Prozesse sind unter Bezeichnungen oder geschützten Marken wie LENS, DMLS, LaserCusing^{®}, XJet^{®}3D Printing, Polyamidguss, und als Multi-Jet Modeling bekannt.

Additive Herstellungsverfahren können das Material auch punktweise oder tröpfchenweise aufbringen, beispielsweise 3D-Druckverfahren, bei denen ein flüssiges oder verflüssigtes Material aus einem Druckkopf abgegeben wird und der Druckkopf selektiv die durch die Datensteuerung vorbestimmten Produktbereiche anfährt, um das Produkt aufzubauen. Das Material kann hierbei in flüssiger Ausgangsform vorliegen oder als Draht, Strang oder dergleichen und vor dem Auftrag aufgeschmolzen werden. Als ein generatives oder additives Fertigungsverfahren ist nach dieser Beschreibung und den anhängenden Ansprüchen insbesondere jegliches in ASTM F2792-10 definiertes additives Herstellungsverfahren verstanden werden, beinhaltend jedes Verfahren der Materialverbindung zur Herstellung von Objekten aus 3D Modelldaten, insbesondere 3D-Drucken, Fused Deposition Modeling, selektives Lasersintern oder -schmelzen und Stereolitographie.

Additive Herstellungsverfahren werden seit den 1990er Jahren industriell eingesetzt. Anfängliche Einsatzformen umfassten den Prototypenbau, bei dem die additiven Herstellungsverfahren es ermöglichten, ein Anschauungsstück eines Produktes herzustellen, um dieses visuell prüfen und gegebenenfalls in Einbausituationen untersuchen zu können. Diese Herstellung von Anschauungsstücken wurde weiterentwickelt zu dem Prototypenbau, bei dem ein Produkt mit bereits angenäherten mechanischen Eigenschaften des Originalprodukts additiv hergestellt wurde, um dies mechanischen Prüfungen unterziehen zu können. Durch stetige Weiterentwicklung des additiven Herstellungsprozesses nach den unterschiedlichen additiven Herstellungsverfahren haben sich diese so weiterentwickelt, dass auch einzelne Produkte mit für den Endverbraucher ausreichenden Eigenschaften herstellbar sind. Diese Fortentwicklung ist insbesondere durch eine hochauflösende selektive Fertigung möglich, die durch geeignete Wahl von Ausgangsstoffen und Fertigungsparametern eine Dichte von über 99 % im additiven Herstellungsverfahren erzeugt. Die so additiv hergestellten Bauteile mit hoher Dichte weisen eine so geringe Restporosität auf, dass die mechanischen Eigenschaften qualitativ zuverlässig und auf hohem Niveau liegen und mit traditionellen Herstellungsverfahren wie dem Guss oder der mechanischen Bearbeitung vergleichbar sind oder deren Eigenschaften sogar übertreffen.

In einzelnen Anwendungen, beispielsweise in der Medizintechnik und der Luftfahrttechnologie, werden Einzelprodukte und Produkte in kleinen Serien bereits durch additive Herstellungsverfahren erzeugt. Ein Problem, welches der additiven Herstellung im Einsatz für kleinere Serien oder mittlere und große Stückzahlen von Produkten entgegensteht, ist die Dauer des Herstellungsprozesses. Aufgrund des in der Regel punkt- oder schichtweisen Aufbaus und der hierbei notwendigen hohen Auflösung und Fertigungsparameter für die angestrebten hochwertigen mechanischen Eigenschaften liegt die Herstellungsdauer bei additiven Herstellungsverfahren über den Herstellungsdauern konventioneller Herstellungsverfahren wie der Gießtechnik und der mechanischen Bearbeitung. Um additive Herstellungsverfahren auch kleineren, mittleren und großen Serien zu öffnen, werden unterschiedliche Ansätze verfolgt. So ist der parallele Aufbau mehrere Produkte auf einer Substratplatte ein Ansatz, um die Herstellungseffizienz zu steigern, andere Vorschläge arbeiten mit kontinuierlichen Verfahren, bei denen mit einem schrägen Schichtaufbau oder punktweisen Herstellungsverfahren die Produkte auf einem Endlosförderband additiv hergestellt werden. Noch haben diese additiven Herstellungstechnologien nicht eine Konkurrenzfähigkeit erreicht, die zu einem Durchbruch gegenüber konventionellen Herstellungsverfahren geführt hat.

HANY HASSANIN ET AL: "Net-shape manufacturing using hybrid selective laser melting/hot isostatic pressing",RAPID PROTOTYPING JOURNAL, Bd. 23, Nr. 4, 20. Juni 2017 (2017-06-20), Seiten 720-726 offenbart ein kombiniertes Verfahren aus einer additiven Bauteilfertigung gefolgt von einem heißisosstatischen Pressverfahren, 1f

US 2018/154439 A1 offenbart ein additives Verfahren zur Herstellung von Bauteilen mit komplexen Geometrien.

Aufgabe der Erfindung ist es, ein additives Herstellungsverfahren fortzuentwickeln, um hierdurch eine Produktion zumindest auch mittlerer Stückzahlen wirtschaftlich effizient zu ermöglichen.

Diese Aufgabe wird erfindungsgemäß gelöst mit einem Verfahren zur Herstellung von Bauteilen, mit den Schritten:
a) Herstellen eines Bauteilrohlings in einem additiven Herstellungsverfahren, umfassend:
   a1) Bestimmen von auszuhärtenden Bauteilbereichen des Bauteilrohlings in einem elektronischen Planungsvorgang und Erzeugen eines Bauteilrohlingsdatensatzes, der die auszuhärtenden Bauteilbereiche definiert,
   a2) Anordnen eines Ausgangsmaterials und selektives Aushärten und Fügen des Ausgangsmaterial in den auszuhärtenden Bauteilbereichen anhand des Bauteilrohlingsdatensatzes zu dem Bauteilrohling,
      wobei das Aushärten und Fügen des Ausgangsmaterials anhand des Bauteilrohlingsdatensatzes so erfolgt, dass der Bauteilrohling eine Bauteilrohlingsdichte aufweist, die kleiner als 99,5% der theoretisch mit dem Ausgangsmaterial erreichbaren Dichte ist,
b) Verdichten und Verfestigen des Bauteilrohlings zu einem Bauteil in einem heißisosstatischem Pressverfahren, bei dem der Bauteilrohling in einer Ofenkammer auf eine Temperatur unterhalb der Schmelztemperatur des Ausgangsmaterial erhitzt wird und durch Erzeugen eines Überdrucks in der Ofenkammer mittels eines Ofenkammerdrucks von mindestens 50 bar gepresst wird, dadurch gekennzeichnet, dass das Erzeugen des Bauteilrohlingsdatensatzes umfasst:
   - Bestimmen einer Außengeometrie des Bauteilrohlings
   - Bestimmen eines ersten Hüllbereichs und eines Kernbereichs des Bauteilrohlings, wobei der erste Hüllbereich den Kernbereich teilweise oder vollständig umschließt,
   - Bestimmen zumindest eines zweiten Hüllbereichs, der ein Teilvolumen des Kernbereichs umschließt, wobei der zweite Hüllbereich innerhalb des ersten Hüllbereichs liegt,
   - Bestimmen eines ersten Wertes eines ersten Fertigungsparameters für den Kernbereich,
   - Bestimmen eines zweiten Wertes des ersten Fertigungsparameters für den ersten Hüllbereich, wobei der zweite Wert verschieden von dem ersten Wert ist,
   - Bestimmen eines dritten Wertes des ersten Fertigungsparameters für das Teilvolumen, wobei der dritte Wert vorzugsweise übereinstimmend mit dem ersten Wert ist, und das selektive Aushärten und Fügen des Ausgangsmaterials
   - im Kernbereich mit dem ersten Wert des ersten Fertigungsparameters erfolgt und eine erste Dichte im Kernbereich erzeugt,
   - im ersten Hüllbereich mit dem zweiten Wert des ersten Fertigungsparameters erfolgt und eine zweite Dichte im ersten Hüllbereich erzeugt, die höher ist als die erste Dichte,
   - im Teilvolumen mit dem dritten Wert des ersten Fertigungsparameters erfolgt und eine dritte Dichte im Teilvolumen erzeugt, die vorzugsweise übereinstimmend zur ersten Dichte ist,
in Übereinstimmung mit Hauptanspruch 1.

Erfindungsgemäß wird das Produkt zunächst in einem additiven Herstellungsverfahren hergestellt, wobei grundsätzlich alle Systeme für eine additive Herstellung für die Erfindung hierbei in Betracht kommen. Das additive Herstellungsverfahren wird dabei erfindungsgemäß jedoch nicht mit solchen Parametern durchgeführt, das als Ausgangsprodukt des additiven Herstellungsverfahrens bereits ein mechanisch ausreichend belastbares Produkt sich ergibt. Stattdessen werden die Parameter des additiven Herstellungsverfahrens mit dem Ziel einer erheblichen zeitlichen Verkürzung des additiven Herstellungsvorgangs modifiziert und hierbei in Kauf genommen, dass das so hergestellte Produkt eine Dichte von weniger als 99,5 % erzielt. Als Dichte wird hierbei verstanden, dass ein porenfrei aus dem Ausgangsmaterial hergestelltes Bauteil eine theoretische Dichte von 100 % aufweist und sich diese Dichte durch Poren im Material in der Praxis stets verringert. Erfindungsgemäß wird beim additiven Herstellungsverfahren nach der Erfindung eine Dichte erzeugt, die unterhalb der heutzutage mit additiven Herstellungsverfahren realisierten Dichte liegt. Die Dichte kann insbesondere auch kleiner als 99%, kleiner als 98% oder kleiner als 97% sein. Des Weiteren können die Fertigungsparameter auch so eingestellt werden, dass die Dichte des Bauteilrohlings noch geringer ist, beispielsweise kleiner als 95%, kleiner als 90%, kleiner als 80%, kleiner als 50% oder kleiner als 20%. Als Dichte ist die über das gesamte Volumen gemittelte Dichte des Bauteilrohlings zu verstehen. Dem aus der reduzierten Dichte resultierenden Nachteil einer geringeren mechanischen Belastbarkeit des additiv hergestellten Bauteilrohlings steht der Vorteil einer erheblich verkürzten Produktionsdauer im additiven Herstellungsverfahren gegenüber.

Erfindungsgemäß wird dem additiven Herstellungsvorgang ein Verdichtungs- und Verfestigungsvorgang nachgeschaltet, der in einem heißisostatischen Pressverfahren erfolgt. Heißisostatische Pressverfahren sind als Produktionsverfahren bekannt für die Verfestigung von sogenannten Grünlingen, also geometrisch vorproduzierten Zwischenprodukten, die häufig noch ein Bindermaterial enthalten. Erfindungsgemäß wird das heißisostatische Pressverfahren zum Verdichten und Verfestigen des Bauteilrohlings eingesetzt, der aus dem additiven Herstellungsverfahren resultiert. Beim heißisostatischen Pressverfahren wird hierbei das Produkt in eine druckdichte Ofenkammer eingesetzt und dort unter Einwirkung von einer erhöhten Temperatur und einem erhöhten Druck verdichtet und verfestigt. Typischerweise wird hierbei in der Ofenkammer ein Druck von mindestens 10bar oder mindestens 50 bar erzeugt, der häufig auch mehr als 100 bar, mehr als 200 bar , mehr als 500bar oder mehr als 1000bar betragen kann

Weiterhin wird eine Temperatur in der Ofenkammer eingestellt, die unterhalb der Schmelztemperatur des Ausgangsmaterials liegt, sodass physikalisch betrachtet ein Sintervorgang erfolgt. Die Temperatur in der Ofenkammer kann beispielsweise bei weniger als 60 %, weniger als 70 %, weniger als 80 % oder weniger als 90 % der Schmelztemperatur des jeweiligen Materials eingestellt werden. Die Bauteilrohlinge werden in dem heißisostatischen Pressverfahren der erhöhten Temperatur und dem erhöhten Druck über eine Pressdauer von typischerweise mehr als einer halben Stunde, mehr als einer Stunde oder mehr als 2,5 Stunden oder mehr als 5 Stunden ausgesetzt und hierdurch verdichtet und verfestigt. Durch diese Verdichtung und Verfestigung im heißisostatischen Pressverfahren wird die Dichte des Bauteilrohlings erhöht und kann auf über 99 % erhöht werden und je nach Ausgangsmaterial und Bauteilrohlingsdichte nach dem additiven Herstellungsverfahren nahezu den idealen Wert der Dichte von 100 % erreichen, beispielsweise über 99,7 oder über 99,9 %.

Erfindungsgemäß wird sowohl die Zeitdauer des Herstellungsverfahrens insgesamt verkürzt, indem eine erhebliche Verkürzung der Produktion im additiven Herstellungsverfahren erfolgt und ein heißisostatisches Pressverfahren als Nachbehandlungsverfahren eingesetzt wird. Die Zeitverkürzung wird erreicht, obwohl ein zusätzlicher Verfahrensschritt erfolgt, weil sowohl im additiven Herstellungsverfahren als auch und erst recht im hei-βisostatischen Pressverfahren eine große Anzahl von Produkten parallel produziert, bzw. behandelt werden können. Mit dem erfindungsgemäßen Verfahren ist weiterhin eine hohe und reproduzierbare Bauteilqualität erreichbar, da durch die Fertigungsabfolge in zuverlässiger Weise Bauteile mit hoher Dichte und hoher mechanischer Belastbarkeit erzeugt werden können. Hierdurch wird die Bauteilproduktion in kleinen und mittleren Serien mit einer sehr geringen Ausschussquote und sehr hohen Zuverlässigkeit der mechanischen Eigenschaften ermöglicht.

Gemäß einer ersten bevorzugten Ausführungsform ist bei dem erfindungsgemäßen Verfahren vorgesehen, dass das Erzeugen des Bauteilrohlingsdatensatz in Schritt a1) umfasst:
- Bestimmen einer Außengeometrie des Bauteilrohlings
- Bestimmen eines Hüllbereichs und eines Kernbereichs des Bauteilrohlings, wobei der Hüllbereich den Kernbereich umschließt,
- Bestimmen eines ersten Wertes eines ersten Fertigungsparameters für den Kernbereich, und
- Bestimmen eines zweiten Wertes des ersten Fertigungsparameters für den Hüllbereich, wobei der zweite Wert verschieden von dem ersten Wert ist,
   und das selektive Aushärten und Fügen des Ausgangsmaterials in Schritt a2)
- im Kernbereich mit dem ersten Wert des ersten Fertigungsparameters erfolgt und eine erste Dichte im Kernbereich erzeugt,
- im Hüllbereich mit dem zweiten Wert des ersten Fertigungsparameters erfolgt und eine zweite Dichte im Hüllbereich erzeugt, die höher ist als die erste Dichte.

Gemäß dieser Ausführungsform wird das Bauteil bei der elektronisch gestützten Fertigungsplanung in einen Hüllbereich und einen Kernbereich unterteilt. Sowohl der Hüllbereich als auch der Kernbereich sind Bestandteil des Produkts selbst und bilden zusammen den Bauteilrohling. Der Hüllbereich stellt hierbei eine dünne Umhüllungslage dar, der entlang und innerhalb der Außenkontur des Bauteils verläuft. Bei der Erzeugung des Bauteilrohlingsdatensatzes kann dieser Hüllbereich definiert werden und erstreckt sich ausgehend von der Außenkontur des Bauteils beispielsweise weniger als 0,5, weniger als 1 oder weniger als 2 mm nach innen. Der Hüllbereich umschließt den Kernbereich, der folglich den Hauptvolumenanteil des Bauteils ausmacht. Dies Umschließung kann vollständig sein, sodass der Hüllbereich als druckübertragende, dichte Hülle im HIP-Prozess dient. Die Umschließung kann auch teilweise sein, sodass der Hüllbereich keine vollkommen druckdichte Hülle darstellt, sondern beispielsweise noch eine Druckdurchleitung zu einem innerhalb des Kernbereichs liegenden Bereich ermöglicht.

Das Bestimmen des Hüllbereichs und des Kernbereichs des Bauteilrohlings kann während des elektronischen Planungsvorgangs, bei dem der Bauteilrohlingsdatensatz erzeugt wird, durch manuelle Eingaben eines Benutzers erfolgen oder nach vorbestimmten Kriterien automatisiert erfolgen. Der Bauteilrohlingsdatensatz umfasst folglich eine geometrische Definition des Hüllbereichs und des Kernbereichs. Im Bauteilrohlingsdatensatz können weiterhin Fertigungsparameter für den Hüllbereich und Fertigungsparameter für den Kernbereich abgelegt sein, diese können aber auch in einem gesonderten Fertigungsdatensatz getrennt von den geometrischen Daten des Produkts, des Kernbereichs und des Hüllbereichs, oder gemeinsam mit diesen abgelegt sein. Beim selektiven Aushärten und Fügen des Ausgangsmaterials werden für den Hüllbereich und für den Kernbereich unterschiedliche Fertigungsparameter im additiven Herstellungsverfahren verwendet. Im Hüllbereich werden hierbei Fertigungsparameter verwendet, die eine höhere Dichte erzeugen als im Kernbereich. Ergebnis des so modifizierten additiven Herstellungsvorgangs ist ein Bauteilrohling, der eine dichte äußere Schicht aufweist und ein demgegenüber weniger dichtes, offen oder geschlossen poröses inneres Materialvolumen aufweist, das von dieser dichten Schicht umhüllt ist. Der so hergestellte Bauteilrohling lässt sich mit sehr kurzer Produktionsdauer im additiven Herstellungsverfahren herstellen, da die Fertigungsparameter für den Kernbereich so gewählt werden können, dass dieser mit sehr kurzer Produktionsdauer hergestellt werden kann. Nur für den Hüllbereich wird eine Fertigungsweise mit Parametern verwendet, die eine hohe Dichte, insbesondere eine Gasdichtigkeit des Hüllbereichs erzeugt. Der gesamte Bauteilrohling weist eine durchschnittliche Dichte gemittelt aus Hüllbereich und Kernbereich von weniger als 97 % auf. Durch den dichten Hüllbereich kann der so hergestellte Bauteilrohling unmittelbar einem heißisostatischen Pressverfahren unterzogen werden. Der dichte Hüllbereich bewirkt hierbei die für eine wirksame heißisostatische Verpressung notwendige dichte Umhüllung des zu verdichtenden und zu verfestigenden Volumens im Kernbereich.

Noch weiter ist es bevorzugt, wenn bei dem erfindungsgemäßen Verfahren das Erzeugen des Bauteilrohlingsdatensatz umfasst:
- Bestimmen eines vierten Wertes des ersten Fertigungsparameters für den zweiten Hüllbereich, wobei der vierte Wert vorzugsweise übereinstimmend mit dem zweiten Wert ist,
   und das selektive Aushärten und Fügen des Ausgangsmaterials
- im zweiten Hüllbereich mit dem vierten Wert des ersten Fertigungsparameters erfolgt und eine vierte Dichte im zweiten Hüllbereich erzeugt, die vorzugsweise übereinstimmend zur zweiten Dichte ist,

Gemäß dieser Fortbildung wird, ebenso wie bei der ersten bevorzugten Ausführungsform, ein äußerer Hüllbereich und ein Kernbereich im Bauteilrohling definiert. Dieser äußere, erste Hüllbereich umschließt den gesamten Kernbereich des Produkts. Innerhalb dieses Kernbereichs ist ein Teilvolumen oder sind mehrere Teilvolumina durch einen zusätzlichen zweiten Hüllbereich umschlossen. Dieser zweite Hüllbereich kann vollständig beabstandet vom ersten Hüllbereich verlaufen und folglich ein isoliertes Einzelvolumen innerhalb des Kernbereichs definieren und umschließen. Der zweite Hüllbereich kann auch an den ersten Hüllbereich linienweise oder punktweise angrenzen und hierdurch ein Teilvolumen umschließen, das teilweise vom ersten Hüllbereich und teilweise vom zweiten Hüllbereich umschlossen ist. Durch die Verwendung dieses ersten und zweiten Hüllbereichs wird eine an die Belastung und hieraus resultierende Beanspruchung des Bauteils angepasste Materialstruktur des Bauteilrohlings und des hieraus durch das heißisostatische Pressverfahren erzeugten Bauteils erzielt. Die Umschließung des Teilvolumens durch den zweiten Hüllbereich erzeugt eine zusätzliche günstige Verdichtung und Verpressung und ermöglicht es, im Teilvolumen eine unterschiedliche Dichte zum übrigen Kernbereich des Produkts zu erzielen.

Alternativ ist es bevorzugt, wenn bei dem erfindungsgemäßen Verfahren das Erzeugen des Bauteilrohlingsdatensatz umfasst:
- Bestimmen einer Außengeometrie des Bauteilrohlings
- Bestimmen eines ersten Hüllbereichs und eines Kernbereichs des Bauteilrohlings, wobei der erste Hüllbereich den Kernbereich teilweise oder vollständig umschließt,
- Bestimmen eines Teilvolumens des Kernbereichs,
- Bestimmen eines ersten Wertes eines ersten Fertigungsparameters für den Kernbereich,
- Bestimmen eines zweiten Wertes des ersten Fertigungsparameters für den ersten Hüllbereich, wobei der zweite Wert verschieden von dem ersten Wert ist, und
- Bestimmen eines dritten Wertes des ersten Fertigungsparameters für das Teilvolumen, wobei der dritte Wert vorzugsweise übereinstimmend mit dem ersten Wert ist, und
   und das selektive Aushärten und Fügen des Ausgangsmaterials
- im Kernbereich mit dem ersten Wert des ersten Fertigungsparameters erfolgt und eine erste Materialeigenschaft im Kernbereich erzeugt,
- im ersten Hüllbereich mit dem zweiten Wert des ersten Fertigungsparameters erfolgt und eine zweite Materialeigenschaft im ersten Hüllbereich erzeugt, die verschieden ist von der erste Materialeigenschaft, und
- im Teilvolumen mit dem dritten Wert des ersten Fertigungsparameters erfolgt und eine dritte Materialeigenschaft im Teilvolumen erzeugt, die verschieden von der ersten Materialeigenschaft ist.

Dabei ist es besonders bevorzugt, wenn der dritte Wert des ersten Fertigungsparameters definiert, dass im Teilvolumen kein Ausgangsmaterial während des additiven Herstellungsverfahrens angeordnet wird, oder im Teilvolumen das Ausgangsmaterial während des additiven Herstellungsverfahrens angeordnet wird, und in einem nachfolgenden Schritt wieder entfernt wird. Gemäß dieser Ausführungsform wird ein hohles, das heißt nicht mit Material gefülltes Teilvolumen erzeugt, in dem folglich ein Gas oder Umgebungsluft angeordnet ist. Dies kann einerseits, je nach verwendetem additivem Herstellungsverfahren, erzielt werden, indem durch den dritten Wert des ersten Fertigungsparameters definiert wird, dass im Teilvolumen kein Ausgangsmaterial angeordnet wird, sodass unmittelbar beim additiven Herstellungsvorgang das Teilvolumen ungefüllt bleibt. Dies ist insbesondere bei additiven Herstellungsverfahren möglich, die punktweise das Material anordnen und aushärten und verbinden. Alternativ, insbesondere bei additiven Herstellungsverfahren, die ein Pulverbett auftragen, kann der dritte Wert des ersten Fertigungsparameters definieren, dass das im Teilvolumen angeordnete Material nicht ausgehärtet und verbunden wird, sodass dieses nach wie vor in unverfestigter Form, also als Pulverlage oder flüssig, bestehen bleibt. Das Material aus dem Teilvolumen kann dann in einem nachfolgenden Schritt wieder entfernt werden, wodurch das hohle Teilvolumen entsteht. Dieser Entfernungsschritt kann unmittelbar nach dem Schichtauftrag und der selektiven Aushärtung der Schicht erfolgen oder kann nach mehreren aufeinanderfolgenden Schichtaufträgen und deren jeweiliger selektiver Aushärtung erfolgen, beispielsweise bei einem Fertigungsfortschritt, der den zweiten Hüllbereich um das Teilvolumen noch nicht geschlossen hat, dies aber im nächsten Fertigungsschritt erfolgen würde. Das solcherart erzielte hohle Teilvolumen kann im nachfolgenden HIP-Prozess erhalten bleiben, wenn es mit der Umgebung verbunden ist, also zumindest einen Verbindungskanal zur umgebenden Hülle und durch diese hindurch das Teilvolumen mit dem Ofenkammerdruck in der Ofenkammer des HIP-Ofens verbindet.

Noch weiter ist es bevorzugt, wenn der vierte Wert des ersten Fertigungsparameters definiert, dass im Teilvolumen ein zweites Ausgangsmaterial während des additiven Herstellungsverfahrens angeordnet wird, das von dem Ausgangsmaterial in dem Kernbereich verschieden ist. Gemäß dieser Ausführungsform wird im Teilvolumen ein zweites Ausgangsmaterial angeordnet, dass von dem Ausgangsmaterial im Kernbereich verschieden ist. Auf diese Weise kann ein Bauteilrohling hergestellt werden, der unterschiedliche Materialbereiche aufweist. Dies kann insbesondere bei punktweise auftragenden Herstellungsverfahren durch direkten selektiven Auftrag unterschiedlicher Materialien erfolgen. Die unterschiedlichen Materialien können nachfolgend gemeinsam im HIP-Prozess verdichtet und verfestigt werden.

Weiterhin ist es bevorzugt, wenn der dritte Wert des ersten Fertigungsparameters definiert, dass im Teilvolumen ein anderes Material angeordnet wird als im Kernbereich. Dies kann einerseits so erfolgen, dass im Zuge des Materialauftrags direkt ein erstes Ausgangsmaterial im Kernbereich und ein zweites Ausgangsmaterial im Teilvolumen angeordnet wird, wenn der Prozessablauf des additiven Herstellungsverfahrens dies zulässt, wie beispielsweise bei 3D-Druckverfahren.

Alternativ kann dies so erfolgen, dass das Ausgangsmaterial während des additiven Herstellungsverfahrens in Kernbereich und Teilvolumen angeordnet wird, in einem nachfolgenden Schritt wieder entfernt wird, und das Teilvolumen mit einem zweiten Ausgangsmaterial gefüllt wird, das von dem Ausgangsmaterial im Kernbereich verschieden ist. Gemäß dieser Ausführungsform wird das Teilvolumen zunächst mit dem Ausgangsmaterial gefüllt, dies jedoch wieder nachfolgend entfernt, wie zuvor beschrieben, um ein hohles Teilvolumen herzustellen. Das solcherart erzeugte hohle Teilvolumen wird dann mit einem zweiten Ausgangsmaterial gefüllt, das unterschiedlich von dem ersten Ausgangsmaterial ist. Dies kann wiederum schichtweise erfolgen, oder kann insgesamt nach dem Auftrag mehrerer Schichten des Ausgangsmaterials erfolgen. Die Befüllung des Teilvolumens mit dem zweiten Ausgangsmaterial kann ebenfalls schichtweise erfolgen oder es kann das gesamte Teilvolumen in einem Schritt oder in zwei oder mehr Schritten mit dem zweiten Ausgangsmaterial befüllt werden. Diese Befüllung erfolgt vorzugsweise bevor der zweite Hüllbereich das Teilvolumen vollständige oder teilweise verschließt, um eine gute Zugänglichkeit zu erhalten.

Dabei ist es besonders bevorzugt, wenn während oder nach dem Füllen des zweiten Ausgangsmaterials in das Teilvolumen eine Verdichtung des zweiten Ausgangsmaterials in dem Teilvolumen erfolgt, insbesondere mittels eines Rüttelprozesses des zweiten Ausgangsmaterials. Solche Verdichtungsmaßnahmen, wie beispielsweise ein Rüttelprozess, kann zu einer ausreichenden Verdichtung des zweiten Ausgangsmaterials im Teilvolumen führen, die im nachfolgenden HIP-Prozess zu einem mechanisch belastbaren, dichten Bauteilbereich auch im Teilvolumen führt. Die Verdichtung kann insgesamt nach der Befüllung des Teilvolumens erfolgen, nach erfolgter Verdichtung kann auch eine erneute Befüllung des Teilvolumens erfolgen, um durch die Verdichtung freigewordene Bereiche des Teilvolumens aufzufüllen. Die Verdichtung und Nachfüllung von zweitem Ausgangsmaterial in das Teilvolumen kann in zwei, drei oder mehreren aufeinanderfolgenden Schritten erfolgen, um eine möglichst vollständige und dichte Befüllung des Teilvolumens mit dem zweiten Ausgangsmaterial zu erreichen.

Bei den vorgenannten bevorzugten Ausführungsformen mit einem Teilvolumen innerhalb des Kernbereichs ist es weiterhin besonders bevorzugt, wenn die im Schritt a1) definierten auszuhärtenden Bauteilbereiche einen Druckausgleichskanal umfassen, der sich ausgehend von dem ersten Hüllbereich zu dem zweiten Hüllbereich erstreckt und das Teilvolumen mit der Umgebung des Bauteilrohlings für eine Fluiddruckübertragung verbindet. Ein solcher Druckausgleichskanal bewirkt eine direkte Druckverbindung zwischen dem Teilvolumen und der Umgebung des Bauteilrohlings, sodass während des HIP-Prozesses im Teilvolumen der Druck vorherrscht, der in der Ofenkammer des HIP-Prozesses aufgebracht wird. Auf diese Weise kann das Teilvolumen als hohles Volumen erhalten bleiben und wird nicht durch den HIP-Prozess verformt oder sogar vollkommen reduziert. Der Druckausgleichskanal kann in erster Linie dazu dienen, um ein hohles Teilvolumen zu erhalten, in bestimmten Anwendungen aber auch dazu, um ein nicht während des HIP-Prozesses im Teilvolumen angeordnetes zweites Ausgangsmaterial unverdichtet und unverfestigt zu erhalten.

Gemäß einer weiteren bevorzugten Ausführungsform ist vorgesehen, dass
- der Fertigungsparameter eine Verfahrgeschwindigkeit eines gebündelten Elektronenstrahls ist und der erste Wert kleiner ist als der zweite Wert bzw. der dritte Wert kleiner ist als der vierte Wert, oder der Fertigungsparameter eine Strahlungsintensität eines gebündelten Elektronenstrahls ist und der erste Wert größer ist als der zweite Wert bzw. der dritte Wert größer ist als der vierte Wert, oder
- der Fertigungsparameter ein Bahnabstand zwischen zwei nebeneinanderliegenden Rasterbahnen eines gebündelten Elektronenstrahls ist und der erste Wert kleiner ist als der zweite Wert, bzw. der dritte Wert kleiner ist als der vierte Wert oder
- der Fertigungsparameter eine Dauer einer zur Aushärtung und Verbindung führenden Energieeinwirkung auf das Ausgangsmaterial ist und der erste Wert größer ist als der zweite Wert bzw. der dritte Wert größer ist als der vierte Wert, oder
- der Fertigungsparameter eine Schichtdicke oder eine Tropfengröße beim Aufbringen des Ausgangsmaterials ist, und der erste Wert kleiner ist als der zweite Wert, bzw. der dritte Wert kleiner ist als der vierte Wert, oder
- der Fertigungsparameter eine Materialdefinition ist und der erste Wert, der zweite Wert und/oder der dritte Wert jeweils unterschiedliche Ausgangsmaterialien definieren.

Zur Erzielung der unterschiedlichen Dichten oder Materialeigenschaften im Kernbereich und im Hüllbereich, bzw. im Teilvolumen und im ersten oder zweiten Hüllbereich, können ein einziger oder mehrere Fertigungsparameter des additiven Herstellungsverfahrens verändert werden. Grundsätzlich kann die Verfahrgeschwindigkeit eines Energiestrahls wie einer elektromagnetischen Strahlung, beispielsweise eines Laserstrahls, mit der die selektiv auszuhärtenden Bereiche bestrahlt werden und hierdurch aufgeschmolzen werden und nachfolgend erstarren, oder durch eine Fotopolymerisation verfestigt werden, im Kernbereich bzw. Teilvolumen gegenüber dem Hüllbereich erhöht werden. Durch die erhöhte Verfahrgeschwindigkeit wird die Produktionsdauer im additiven Herstellungsverfahren maßgeblich reduziert. Alternativ oder zusätzlich kann die Strahlungsintensität eines solchen Strahls reduziert werden, wobei unter Strahlungsintensität die Strahlungsenergie pro Fläche zu verstehen ist. So kann die Bündelung eines solchen Elektronenstrahls verringert werden und hierdurch eine größere Fläche vom Elektronenstrahl erfasst werden. Dies ermöglicht ebenfalls, in kürzerer Zeit eine bestimmte Fläche mit dem Elektronenstrahl abzufahren und hierdurch die Produktionsdauer zu verringern. Weiterhin kann ein Bahnabstand zwischen benachbarten Bahnen, die ein Elektronenstrahl abfährt, im Kernbereich bzw. Teilvolumen vergrößert werden im Vergleich zum Hüllbereich. Hierdurch können Randbereiche der Bahn mit geringerer Energie bestrahlt werden oder sogar der Bahnabstand so groß gewählt werden, dass zwischen zwei Bahnen nicht ausgehärtetes Ausgangsmaterial verbleibt. Durch diese Parametervariation kann im Kernbereich/Teilvolumen eine Fläche innerhalb kürzerer Zeit mit dem Elektronenstrahl abgefahren werden und hierdurch die insgesamte Produktionsdauer ebenfalls reduziert werden. Weiterhin kann die Energieeinwirkung im Kernbereich / Teilvolumen verkürzt werden oder gar keine Energieeinbringung erfolgen, um den Gad der Aushärtung im Kernbereich / teilvolumen zu verringern oder eine Aushärtung vollständig zu vermeiden. Dies kann insbesondere durch Verkürzung der Dauer der Energieeinwirkung erreicht werden. Noch weiter kann die Schichtdicke oder Tröpfchengröße beim Aufbringen des Ausgangsmaterials im Kernbreich/Teilvolumen erhöht werden. Dies kann bei übereinstimmender Energieeinwirkung im Kernbereich und Hüllbereich zu einer insgesamt geringeren Aushärtung im Kernbereich/Teilvolumen führen. So kann im Kernbereich / Teilvolumen beispielsweise eine größere Schichtdicke erzeugt werden, indem jeweils nur nach jedem zweiten, dritten oder nach mehreren Schichtaufträgen eine Aushärtung und Verbindung durch Energieeinwirkung erfolgt, wohingegen im Hüllbereich nach jedem Schichtauftrag ausgehärtet und verbunden wird.

Noch weiter ist es bevorzugt, wenn das Erzeugen des Bauteilrohlingsdatensatz in Schritt a1) umfasst:
- Bestimmen einer Außengeometrie des Bauteilrohlings
- Bestimmen eines Hüllbereichs und eines Kernbereichs des Bauteilrohlings, wobei der Hüllbereich den Kernbereich teilweise oder vollständig umschließt,
   und beim selektiven Aushärten und Fügen des Ausgangsmaterials in Schritt a2)
- das Ausgangsmaterial im Hüllbereich eine zum Aushärten und Fügen führende Bearbeitung durchläuft, und
- das Ausgangsmaterial im Kernbereich nicht eine zum Aushärten und Fügen führende Bearbeitung durchläuft, und
das Verdichten und Verfestigen des Bauteilrohlings in Schritt b) umfasst:
- Aushärten und Fügen des Ausgangsmaterials im Kernbereich.

Gemäß dieser Ausführungsform wird beim additiven Herstellungsverfahren der Hüllbereich ausgehärtet und gefügt und bildet hierdurch eine die Bauteilgeometrie definierende und stabilisierende Kühlstruktur aus. Im Kernbereich oder zumindest Teilbereichen des Kernbereichs erfolgt demgegenüber keine Aushärtung und Fügung, sodass das Ausgangsmaterial im Kernbereich bzw. Teilbereichen des Kernbereichs unverändert bleibt während des additiven Herstellungsvorgangs. Im nachgeschalteten heißisostatischen Pressvorgang wird dann der Kernbereich bzw. die darin befindlichen nicht ausgehärteten Teilbereiche verdichtet und verfestigt. Dies kann aufgrund der umhüllenden Struktur des Hüllbereichs wirksam im heißisostatischen Pressverfahren erfolgen, da hierdurch der nicht ausgehärtete Kernbereich gasdicht umschlossen ist. Mit dieser Modifikation des Herstellungsvorgangs kann die Herstellungsdauer im additiven Herstellungsverfahren maßgeblich reduziert werden.

Gemäß einer bevorzugten Ausführungsform ist weiterhin vorgesehen, dass bei dem Aufbau des Bauteilrohling mit einem ersten und zweiten Hüllbereich, einem Kernbereich und einem Teilvolumen im Schritt a1)
- einer der beiden Werte, ausgewählt aus dem ersten und dem dritten Wert, definiert, dass das das Ausgangsmaterial nicht eine zum Aushärten und Fügen führende Bearbeitung durchläuft, und
- der andere der beiden Werte, ausgewählt aus dem ersten und dem dritten Wert, definiert, dass das das Ausgangsmaterial eine zum Aushärten und Fügen führende Bearbeitung durchläuft, und

beim selektiven Aushärten und Fügen des Ausgangsmaterials in Schritt a2)
   - das Ausgangsmaterial in dem Bereich, der mit dem einen der beiden Werte ausgehärtet und gefügt wird, nicht eine zum Aushärten und Fügen führende Bearbeitung durchläuft, und
   - das Ausgangsmaterial in dem Bereich, der mit dem anderen der beiden Werte ausgehärtet und gefügt wird, eine zum Aushärten und Fügen führende Bearbeitung durchläuft, und
das Verdichten und Verfestigen des Bauteilrohlings in Schritt b) umfasst:
   - Aushärten und Fügen des Ausgangsmaterials in dem Bereich, der mit dem einen der beiden Werte ausgehärtet und gefügt wird.

Gemäß dieser Ausführungsform wird ein Kernbereich und ein Teilvolumen oder Teilvolumina im Kernbereich während der Erstellung des Bauteilrohlingsdatensatzes definiert und in diesem Kernbereich und dem Teilvolumen/den Teilvolumina Fertigungsparameter zugeordnet, die in nachfolgenden additiven Herstellungsverfahren dazu führen, dass nur der Kernbereich oder nur das Teilvolumen, bzw. die Teilvolumina einer Aushärtung und Fügung unterzogen werden, wohingegen der entsprechend andere Bereich (also das Teilvolumen/ die Teilvolumina, bzw. der Kernbereich) keiner solchen Härtung und Fügung unterzogen werden und das Ausgangsmaterial hier folglich unverändert bleibt. Ergebnis ist dann ein Bauteilrohling, der eine gehärtete und gefügte Hülle aufweist und innerhalb der Hülle nicht ausgehärtete Volumenbereiche und ausgehärtete Volumenbereiche aufweist, wobei die ausgehärteten Volumenbereiche typischerweise eine geringere Dichte aufweisen, als der Hüllbereich. Wiederum kann der so hergestellte Bauteilrohling im nachgeschalteten heißisostatischen Pressvorgang verdichtet und verfestigt werden, um eine endgültige Bauteildichte mit hoher mechanischer Belastbarkeit zu erzeugen.

Gemäß einer weiteren bevorzugten Ausführungsform ist vorgesehen, dass das Ausgangsmaterial eine solche Temperaturbeständigkeit aufweist, und der heißisostatische Pressvorgang mit solchen Prozessparametern durchgeführt wird, dass das Gewicht des Bauteilrohlings sich während des heißisostatischen Pressvorgansg nicht verändert. Gemäß dieser Ausführungsform bleibt das gesamte Material, das während des additiven Herstellungsvorgangs zu dem Bauteilrohling geformt wurde, während des heißisostatischen Pressvorgangs kein Material durch Übergang in die gasförmige Phase aus dem Bauteilrohling entfernt wird. Das Bauteilgewicht des nach dem heißisostatischen Pressvorgansg erhaltenen Produkts entspricht demnach dem Bauteilgewicht des Bauteilrohling, der nach dem additiven Herstellungsverfahren in die Ofenkammer des heißisostatischen Pressofen eingesetzt wird.

Gemäß einer weiteren bevorzugten Ausführungsform ist vorgesehen, dass als Ausgangsmaterial ein beim Aushärten und Fügen sich homogen verhaltendes Material verarbeitet wird, insbesondere ein Pulvermaterial, das aus Pulverpartikeln besteht, wobei alle Pulverpartikel eine übereinstimmende Schmelztemperatur aufweisen. Unter einem sich homogen verhaltendem Material ist hierbei eine Flüssigkeit, ein Pulver, ein fester Ausgangsstoff oder dergleichen zu verstehen, in dem dasjenige Material, aus dem das spätere Bauteil besteht, enthalten ist, und das während des additiven Herstellungsvorgang ausgehärtet und verbunden wird. Alternativ oder zusätzlich ist unter einem sich homogen verhaltendem Material hierbei eine Flüssigkeit, ein Pulver, ein fester Ausgangsstoff oder dergleichen zu verstehen, dessen Bestandteile sich während des additiven Herstellungsverfahrens prinzipiell gleich verhalten, also im Hinblick auf den Härtungs- und Verbindungsvorgang ein übereinstimmendes Verhalten zeigen.

Insbesondere kann das sich homogen verhaltende Material frei von Bindemitteln und anderen Hilfsmitteln sein, die nachfolgend noch aus dem Produkt im Laufe des Herstellungsprozesses zu entfernen sind. Insbesondere wird als Ausgangsmaterial kein Material eingesetzt, das zwei verschiedene Werkstoffe mit unterschiedlicher Schmelztemperatur aufweist. Solche inhomogenen Ausgangsmaterialien werden beispielsweise bei indirekten additiven Herstellungsverfahren eingesetzt, bei denen im additiven Herstellungsverfahren lediglich ein geringbelastbarer Grünling hergestellt wird, der nachfolgend einem Ofensinterprozess unterzogen werden muss. Stattdessen zeichnet sich der Bauteilrohling im erfindungsgemäßen Verfahren dadurch aus, dass er das gleiche Gesamtgewicht aufweist, wie das Bauteil, das nach dem heißisostatischen Pressvorgang resultiert, das heißt es erfolgt keine Entfernung von Fertigungshilfsmitteln wie Bindern oder dergleichen. Insbesondere beachtlich ist hierbei, dass aufgrund der Natur des heißisostatischen Pressvorgangs eine Druckausübung für die Erzielung der vorteilhaften mechanischen Eigenschaften notwendig ist, was eine insoweit druckdichte Umhüllung des Bauteilrohlings oder eine im Bauteilrohling selbst ausgebildete dichte Außenhülle erfordert und hierdurch das Entfernen von Hilfsmitteln wie Bindehilfsmitteln aus dem Bauteilrohling systematisch verhindern würde.

Gemäß einer weiteren bevorzugten Ausführungsform ist vorgesehen, dass als Ausgangsmaterial ein Pulvermaterial verarbeitet wird, welches Pulverpartikel unterschiedlicher Korngröße aufweisen, wobei die Korngröße zwischen einer unteren Pulverkorngrößengrenze und einer oberen Pulverkorngrößengrenze liegt und sich über eine Pulverkorngrößenbandbreite, die der oberen Pulverkorngrößengrenze abzüglich der unteren Pulverkorngrößengrenze entspricht, erstreckt, und wobei ein Gewichtsanteil kleiner Pulverpartikel mit einer Korngröße, die zwischen 10% und 20% der gesamten Pulverkorngrößenbandbreite von der unteren Pulverkorngrößengrenze liegen, mindestens 20 Gew.-% des Pulvermaterials beträgt, und und wobei ein Gewichtsanteil großer Pulverpartikel mit einer Korngröße, die zwischen 10% und 20% der gesamten Pulverkorngrößenbandbreite von der oberen Pulverkorngrößengrenze liegen, mindestens 20 Gew.-% des Pulvermaterials beträgt.

Gemäß dieser Ausführungsform wird als Ausgangsmaterial Pulvermaterial verwendet, welches eine große Bandbreite an Pulverkorngrößen aufweist. Gegenüber üblicherweise für additive Herstellungsverfahren verwendeten Pulvern, die insbesondere eine bestimmte Korngröße mit einer schmalen Streuungsweite der Korngröße aufweisen, wird hierdurch einerseits ein kostengünstiges Ausgangsmaterial erzielt. Je nach Fließverhalten des Pulvers kann die große Bandbreite der Korngröße des Pulvers zu einem günstigen Setzverhalten des Pulvers führen und folglich eine hohe Dichte erzielen. Dies ist insbesondere vor dem Hintergrund, dass im nachfolgenden HIP-Prozess eine reduzierte Schrumpfung und reduzierter Verzug auftritt, wenn bereits eine hohe Pulverlagendichte erzielt wurde, vorteilhaft. Das Pulver kann hierbei eine Korngrößenverteilung nach Gauß mit breiter Gauß-Kurve aufweisen, kann aber auch durch Einmischung von zwei Pulverkornfraktionen zusammengesetzt sein. Vorteilhaft ist, dass mit dem erfindungsgemäßen Verfahren keine Notwendigkeit besteht, in hochwertigen und aufwendigen Sieb- und Sichtungsverfahren hergestellte Pulvermischungen mit einer schmalen Korngrößenbandbreite zu verarbeiten, da durch den nachfolgenden HIP-Prozess des erfindungsgemäßen Verfahrens eine zuverlässige Verdichtung und Verfestigung des Bauteilrohlings zu dem belastbaren Bauteil erreicht wird.

Dabei ist es besonders bevorzugt, wenn die untere Pulverkorngrößengrenze 0, 10 oder 20 µm und die obere Pulverkorngrößengrenze 40, 50 oder 75 µm beträgt. Es hat sich gezeigt, dass mit Pulvern, die eine Korngröße innerhalb der so definierten Bereiche aufweisen, eine ausreichende Auflösung von geometrischen Details des Bauteilrohlings im additiven Herstellungsprozess erzielt werden kann und zugleich eine ausreichende Festigkeit des endgültig nach dem HIP-Prozess hergestellten Bauteils erreicht wird.

Es ist weiterhin bevorzugt, wenn als Ausgangsmaterial ein Pulvermaterial verarbeitet wird, und das selektive Aushärten und Fügen des Ausgangsmaterials die Schritte umfasst:
a) Auftragen einer Pulverschicht auf eine Oberfläche einer Substratplatte oder eines vorgefertigten Bauteils mittels einer Pulverauftragsvorrichtung,
b) Selektives Aushärten der auszuhärtenden Bauteilbereiche in der aufgetragenen Pulverschicht und Verbinden der auszuhärtenden Bauteilbereiche mit der darunterliegenden Substratplatte durch Energieeinwirkung, insbesondere Einwirkung einer elektromagnetischen Strahlung, zum Erzeugen von entsprechend ausgehärteten Bauteilbereichen,
c) Auftragen einer weiteren Pulverschicht auf die zuvor aufgetragene Pulverschicht mittels der Pulverauftragsvorrichtung,
d) Selektives Aushärten der auszuhärtenden Bauteilbereiche in der aufgetragenen weiteren Pulverschicht und Verbinden der auszuhärtenden Bauteilbereiche mit den ausgehärteten Bauteilbereichen der darunterliegenden Pulverschicht durch Energie-einwirkung, insbesondere Einwirkung einer elektromagnetischen Strahlung,
   - Mehrfaches Wiederholen der Schritte c) und d) zum schichtweisen Aufbau des Bauteils.

Gemäß dieser Fortbildung wird als additives Herstellungsverfahren ein pulverbasiertes Lasersinter- oder Laserschmelzverfahren eingesetzt. Diese Verfahren sind geeignet, um eine Vielzahl von metallischen Ausgangsmaterialien zu metallischen Bauteilen zu verarbeiten. Diese Herstellung von metallischen Bauteilen wird durch das erfindungsgemäße Verdichten und Verfestigen im HIP-Prozess zu einem qualitativ zuverlässigen Herstellungsverfahren verbessert, mit dem Bauteile hergestellt werden können, die höchstens mechanischen Beanspruchungen zuverlässig und reproduzierbar widerstehen können.

Bei dem pulverbasierten additiven Herstellungsverfahren ist es dabei besonders bevorzugt, wenn nach zumindest einem Schritt des Auftragens einer Pulverschicht in Schritt a) und Schritt c), vorzugsweise jedem zweiten oder jedem Schritt des Auftragens einer Pulverschicht eine Verdichtung der Pulverschicht erfolgt.

Eine solche Verdichtung bewirkt eine zusätzliche Erhöhung der Pulverdichte im additiven Herstellungsverfahren vor dem Aushärten und Verbinden der jeweiligen Pulverschicht. Insbesondere dann, wenn, wie zuvor beschrieben, bestimmte Bereiche des Bauteilrohlings selektiv nicht einer Aushärtung und Verbindung unterzogen werden, sondern das Ausgangsmaterial in diesen Bereichen unverändert als Pulvermaterial bestehen bleibt, kann eine solche Verdichtung sich vorteilhaft auf das spätere Schrumpfungs- und Verzugs-Verhalten im HIP-Prozess auswirken.

Dabei ist es besonders bevorzugt, wenn die Verdichtung der Pulverschicht mittels eines Rüttelprozesses der Pulverschicht erfolgt. Durch ein Rütteln des Pulverbetts wird eine Setzung der Pulverpartikel hervorgerufen, die eine günstige Verdichtung der Pulverlage ergibt. Neben einem Rüttel-Prozess können auch Press-Prozesse, Walz-Prozesse oder dergleichen eingesetzt werden, um die gewünschte Verdichtung zu erreichen.

Gemäß einer weiteren bevorzugten Ausführungsform ist vorgesehen, dass beim Erzeugen des Bauteilrohlingsdatensatzes das Bestimmen der Außengeometrie des Bauteilrohlings umfasst:
- Bestimmen einer Produktgeometrie und einer an der Produktgeometrie angeordneten Referenzstruktur, die als äußere Oberfläche der Produktgeometrie hinzugefügt ist,
- Bestimmen eines Bearbeitungszuschlagsvolumens, welches in zumindest einem Teilbereich an die Produktgeometrie angelagert ist,
- Verbinden der Produktgeometrie, des Bearbeitungszuschlagsvolumens und der Referenzstruktur zu der Außengeometrie des Bauteilrohlings,
und dass nach dem Verdichten und Verfestigen des Bauteils ein mechanischer Präzisionsbearbeitungsschritt ausgeführt wird, umfassend:
- Definiertes Positionieren des verdichteten und verfestigten Bauteils in einem Bearbeitungsbereich einer materialentfernenden Bearbeitungsvorrichtung, wobei die Referenzstruktur
   o als Messpunkt- oder -Messfläche zur definierten Positionierung des Bauteils in dem Bearbeitungsraum dient oder
   o als Spannpunkt oder Spannfläche einer Spannvorrichtung der materialentfernenden Bearbeitungsvorrichtung dient,
- Entfernen von Material im Bereich des Bearbeitungszuschlagsvolumens mittels einer materialentfernenden Fertigungsmethode, insbesondere einer spanenden Fertigungsmethode in der materialentfernenden Bearbeitungsvorrichtung,
- und dass nach dem Präzisionsbearbeitungsschritt die Referenzstruktur entfernt wird.

Gemäß dieser Ausführungsform wird dem HIP-Prozess ein weiterer Bearbeitungsschritt nachgeschaltet, der eine mechanische Präzisionsbearbeitung beinhaltet. Hierbei wird mit einem materialentfernenden Bearbeitungsverfahren eine präzise Geometrie des Bauteils hergestellt, die einerseits dazu dienen kann, bestimmte Oberflächengüten herzustellen, andererseits dazu dienen kann, durch Schrumpfung und Verzug verursachte Geometrieungenauigkeiten des Bauteils nach dem HIP-Prozess zu beseitigen. Um diese mechanische Bearbeitung durchführen zu können, wird ein Bearbeitungszuschlag bereits ursprünglich eingeplant, das Bauteil also in denjenigen Bereichen, die mechanisch nachbearbeitet werden sollen, größer hergestellt als die spätere Sollgeometrie darstellt. Der Bearbeitungszuschlag kann insgesamt, das heißt an allen Oberflächen des Bauteils, vorgesehen werden, bevorzugt wird der Bearbeitungszuschlag aber nur an vorbestimmten, einigen Oberflächen des Bauteils vorgesehen, um nur dort einen Bearbeitungszuschlag zu haben, an dem auch eine mechanische Nachbearbeitung notwendig und vorgesehen ist. Die mechanische Nachbearbeitung kann beispielsweise durch Fräsen, Schleifen, Erodieren, Drehen erfolgen. Gemäß dieser Fortbildung ist eine Referenzstruktur an dem Bauteil vorgesehen. Diese Referenzstruktur dient dazu, um das Bauteil nach der Entnahme aus dem HIP-Prozess in definierter Weise in einer Bearbeitungsmaschine für die mechanische Nachbearbeitung einspannen zu können und folglich eine automatisiert ablaufende mechanische Nachbearbeitung durchführen zu können. Die Referenzstruktur kann dabei unmittelbar dazu dienen, um daran das Bauteil zu spannen und hierdurch die vordefinierte Lage des Bauteils in der Bearbeitungsmaschine herzustellen. Die Referenzstruktur kann alternativ auch dazu dienen, um eine optische oder abtastende Vermessung durchzuführen und hierdurch eine bestimmte Lage des Bauteils in der Bearbeitungsmaschine einzurichten und diese dann zu spannen. In diesem Fall wird nicht an der Referenzstruktur selbst gespannt, sondern an einem anderen Ort des Bauteils, die Referenzstruktur hierbei aber als Messpunkt oder Messfläche oder Messkörper verwendet, um hierdurch die Lage und Ausrichtung des Bauteils zu bestimmen.

Gemäß einer weiteren bevorzugten Ausführungsform ist vorgesehen, dass beim Verdichten und Verfestigen des Bauteilrohlings zu einem Bauteil der Bauteilrohling mit einem Hüllmaterial umhüllt wird, wobei das Hüllmaterial vorzugsweise eine metallische Folie, wie eine Edelstahlfolie ist. Durch das Umhüllen des Bauteils mit einer Folie, insbesondere einer metallischen Folie, wie einer Edelstahlfolie während des HIP-Prozesses, können unerwünschte Reaktionen, Gefügeveränderungen des Materials während des HIP-Prozesses vermieden werden, da die Folie sich über die gesamte Oberfläche in einer Funktion als Opfer-Anode des Prozesses erstreckt. Des Weiteren können in Zusammenwirkung mit einer bestimmten Atmosphäre eines Aktivgases in der Ofenkammer durch die Edelstahlfolie gewünschte Oberflächenmodifikationen des Bauteils während des HIP-Prozesses erreicht werden. Durch ein solches Hüllmaterial kann einerseits verhindert werden, dass ausdiffundierende Stoffe eine Kontamination des Ofens oder anderer zugleich im Ofen gepresster Bauteile verursachen. Zum anderen kann verhindert werden, dass aus der Ofenathmosphäre stammende Stoffe das umhüllte Bauteil beeinflussen, Insbesondere kann auch, bei der Verpressung von Titanbauteilen, mittels einer Edelstahlfolienumhüllung vermieden werden, dass sich eine spröde α-Phase des Titans ausbildet.

Noch weiter ist es bevorzugt, wenn beim Erzeugen des Bauteilrohlingsdatensatzes das Bestimmen der Außengeometrie des Bauteilrohlings umfasst:
- Bestimmen einer Sollgeometrie,
- Bestimmen eines Schrumpfungsvolumens, welches eine bei dem Verdichten und Verfestigen des Bauteilrohlings auftretende Schrumpfung als ein der Bauteilrohlingsgeometrie zuzuschlagendes Rohbauteilvolumen definiert, durch welches das aus dem Bauteilrohling nach dem Verdichten und Verfestigen hervorgegangene Bauteil die Sollgeometrie aufweist, und/oder
- Bestimmen eines Verzugsvolumens, welches eine bei dem selektiven Aushärten und Fügen des Bauteilrohlings und/oder bei dem Verdichten und Verfestigen des Bauteilrohlings auftretenden Verzug als ein der Bauteilrohlingsgeometrie zuzuschlagendes Rohbauteilvolumen definiert, durch welches das Rohbauteil nach dem Verdichten und Verfestigen die Sollgeometrie aufweist,
- Erzeugen des Bauteilrohlingsdatensatzes aus der Sollgeometrie und einem aus dem Schrumpfungsvolumen und/oder dem Verzugsvolumen bestimmten Korrekturdatensatz.

Mit dieser Fortbildungsform werden Effekte der Schwindung und des Verzugs, die beim additiven Herstellungsverfahren selbst, beispielsweise nach Ablösen eines Bauteils von einer Substratplatte auftreten, und die beim nachfolgenden HIP-Prozess durch die dort erzielte Verdichtung auftreten, bereits bei der Erstellung des Datensatzes für das additive Herstellungsverfahren berücksichtigt. Diese Berücksichtigung kann mit der Zielsetzung erfolgen, Bereiche, in denen mit einem besonders starken Verzug oder einer besonders starken Schrumpfung zu rechnen ist, bereits mit einem Materialzuschlag additiv herzustellen, und hierdurch die nachfolgenden geometrischen Effekte durch Verzug und Schrumpfung teilweise oder vollständig zu kompensieren. Zur Berechnung der durch Schrumpfung und Verzug auftretenden Geometrieveränderungen kann auf Erfahrungswerte und Algorithmen zurückgegriffen werden, die anhand von Masseanhäufungen des Bauteils und computersimulierten thermischen Verzugseffekten währen des additiven Herstellungsvorgangs zurückgegriffen werden, um die gewünschte Kompensation durch die modifizierten geometrischen Vorgaben des Bauteilrohlingsdatensatzes zu erreichen.

Dabei ist es besonders bevorzugt, wenn der Korrekturdatensatz ermittelt wird, indem
- In einem ersten Fertigungsschritt ein Bauteil erzeugt wird, bei dem der Bauteilrohdatensatz der einem die Sollgeometrie eines Produkts beschreibenden Soll-Geometriedatensatz entspricht,
- Nach dem Verdichten und Verfestigen des im ersten Fertigungsschritt hergestellten Bauteil die Ist-Geometrie des Bauteils mittels einer elektronischen Messvorrichtung vermessen wird und hierbei ein dreidimensionaler Ist-Geometriedatensatz erstellt wird,
- Aus einem Vergleich der gemessenen Ist-Geometrie des Bauteils und dem Soll-Geometriedatensatz ein Differenz-Geometriedatensatz berechnet wird, und
- Aus dem Differenz-Geometriedatensatz der Korrekturdatensatz berechnet wird, wobei der Differenz-Geometriedatensatz vorzugsweise mit einem Faktor zwischen 1 und 1,2 multipliziert wird und hierdurch der Differenz-Geometriedatensatz bestimmt wird.

Gemäß dieser Ausgestaltung wird in einem iterativen Prozess die notwendige Korrektur ermittelt. Hierzu wird zunächst ein Bauteil hergestellt, bei dem der Bauteilrohdatensatz der gewünschten Soll-Geometrie des Bauteils entspricht. Das so hergestellte Bauteil wird nach dem HIP-Prozess einer dreidimensionalen Vermessung unterzogen. Die hierbei festgestellte Geometrie wird mit der gewünschten Soll-Geometrie verglichen und hier durch die durch Verzug und Schrumpfung resultierenden Abweichungen von der Soll-Geometrie ermittelt. Diese Abweichungen werden als Korrekturdatensatz verwendet, wobei hierbei durch Berücksichtigung eines Faktors Schrumpfungs- und Verzugseffekte, die durch das über den Korrekturdatensatz hinzugefügte oder subtrahierte Kompensationsvolumen entstehen, die ergänzend berücksichtigt werden können, um das im nächsten Schritt mit dem Bauteilrohdatensatz, der mit dem Korrekturdatensatz korrigiert wurde, hergestellte Bauteil der Sollgeometrie ideal anzunähern.

Bevorzugte Ausführungsformen der Erfindung werden anhand der Figuren beschrieben. Es zeigen:

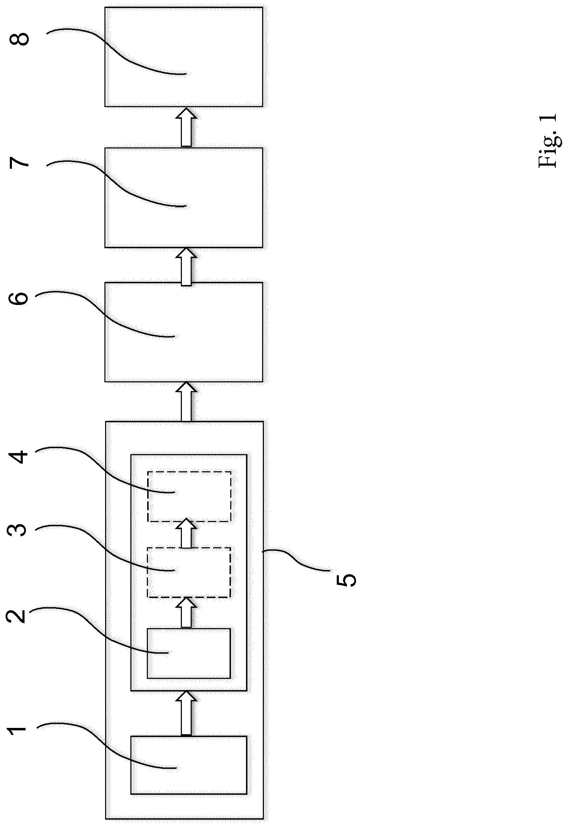

- Fig. 1: ein schematisches Ablaufdiagramm des erfindungsgemäßen Verfahrens,
- Fig. 2a-f: den Aufbau eines Bauteils gemäß dem erfindungsgemäßen Verfahren in einer schematischen Darstellung.

Das erfindungsgemäße Verfahren beginnt mit der Erstellung eines fertigen Datensatzes im Schritt 1. Hierbei wird anhand einer gewünschten Sollgeometrie eines Bauteils ein Datensatz, beispielsweise standardisiert im STL-Datenformat, erstellt, was computergestützt mittels CAD-Programmen erfolgt. Dieser dreidimensionale Datensatz wird im Schritt 1 mit Fertigungsparametern ergänzt, die bestimmte Parameter des Fertigungsverfahrens für das Bauteil definieren, die in der späteren Produktion in einem additiven Herstellungsverfahren angewendet werden sollen. Diese Fertigungsparameter können für das gesamte Bauteil gelten, können aber auch spezifisch für einzelne Bauteilbereiche definiert werden und auf diese Weise unterschiedliche Fertigungsparameter für unterschiedliche Bauteilbereiche definieren.

Die Erstellung des Fertigungsdatensatzes in Schritt 1 beinhaltet weiterhin die Definition von spezifischen Hilfsstrukturen wie Stützen und dergleichen, die für den Fertigungsvorgang in bestimmten additiven Herstellungsverfahren notwendig oder vorteilhaft sind und die nachfolgend vom Bauteil abgetrennt werden müssen.

Weiterhin wird in Schritt 1 definiert, in welcher Lage das Bauteil im Produktionsraum der Vorrichtung zur additiven Herstellung des Bauteils angeordnet wird. Hierbei ist insbesondere bei schichtweisen additiven Herstellungsverfahren auf eine vorteilhafte Ausrichtung zu achten, um eine hohe Oberflächengüte bestimmter Oberflächen zu erzielen.

Dem Schritt 1 folgt als Schritt 2 die Herstellung des Bauteils in einem additiven Herstellungsverfahren. Hierbei wird das Bauteil automatisiert und schichtweise, punktweise oder linienweise anhand des Fertigungsdatensatzes aufgebaut und dadurch produziert. Der Fertigungsdatensatz definiert hierbei in jeder Schicht, die jeweils einem Schnitt durch das Bauteil entspricht, die in diesem Schnitt liegenden Volumenanteile des Bauteils, ggfs. korrigiert mit geometrischen Parametern, die eine Schrumpfung oder einen Verzug berücksichtigen und ggfs. zuzüglich Fertigungshilfen wie Stützen, Referenzstrukturen oder dergleichen. Diese Volumenanteile werden in Schritt 2 ausgehärtet und mit bereits zuvor ausgehärteten Volumenanteilen des Bauteils verbunden. Dies kann z.B. durch selektives, von dem Fertigungsdatensatz gesteuertes Abrastern einer Pulverschicht, beispielsweise aus einer Titanlegierung oder Titan mit einem Laser erfolgen, oder durch maskierte Belichtung einer Flüssigkeitslage einer photopolymerisierenden Flüssigkeit oder durch punktweises Auftragen eines aushärtenden Materials. Die selektive Laserbestrahlung kann dabei in einer kontrollierten Atmosphärenumgebung, beispielsweise in Argonatmosphäre, erfolgen.

Aufgrund der nur niedrigen notwendigen Dichte, die bei dem erfindungsgemäßen Prozess für den Bauteilrohling erforderlich ist, kann die Leistung des Lasers, mit dem selektiv bestrahlt wird, niedriger sein, als bei solchen Herstellungsverfahren, die darauf abzielen, bereits im additiven Herstellungsprozess die erforderliche Bauteilfestigkeit zu erreichen. So ist es beispielsweise möglich, metallische Pulver mit einem Laser im additiven Herstellungsprozess zu selektiv zum Bauteilrohling zu verbinden, der eine Leistung von weniger als 10kw, oder weniger als 5kW aufweist, wie beispielsweise Yb-Faser-Laser und selbst Excimer-Laser mit einer Leistung unterhalb von 500W können für die Metallpulververarbeitung eingesetzt werden.

Dem Schritt 2 kann ein Schritt 3 folgen, bei dem aus bestimmten Bereichen des teilweise oder vollständig aufgebauten Produkts Ausgangsmaterial wieder entfernt wird, um hierdurch Hohlräume zu erzeugen. Diesem Schritt 3 kann optional ein weiterer Schritt 4 folgen, in dem solcherart erzeugte Hohlräume mit einem Ausgangsmaterial, das verschieden von dem ursprünglichen Ausgangsmaterial ist, wieder befüllt werden. Auf diese Weise können Bauteile hergestellt werden, die Bereiche mit unterschiedlichen Ausgangsmaterialien aufweisen.

In vielen additiven Herstellungsverfahren, insbesondere 3D-Druckverfahren, kann auch bereits im Schritt 2 mit unterschiedlichen Ausgangsmaterialien das Produkt unmittelbar aufgebaut werden. Der Schritt 3 oder der Schritt 4 kann auch wiederum gefolgt werden von einer Fortsetzung des additiven Herstellungsverfahrens in Schritt 2, um das Produkt nach Erzeugung des Hohlraums, und gegebenenfalls Befüllung des Hohlraums, weiter aufzubauen.

Die Erstellung des Fertigungsdatensatzes und das Herstellen des Bauteils in den Schritten 2 und optional 3 und 4 bildet zusammen das additive Herstellungsverfahren 5 insgesamt. Diesem additiven Herstellungsverfahren 5 folgt typischerweise ein Spannungsarmglühen, beispielsweise als Vakuumwärmebehandlung, in einem Schritt 6. Erfindungsgemäß erfolgt nach diesem Schritt 6 ein heißisostatischer Pressvorgang des Bauteils in einem Schritt 7. Dieser heißisostatische Pressvorgang erfolgt in einem heißisostatischen Pressofen mit einer Ofenkammer, die unter erhöhten Druck gesetzt werden kann und in der eine erhöhte Temperatur über einen vorbestimmten Zeitraum eingestellt werden kann. Die Temperatur kann als konstante Temperatur oder als Temperaturprofil über die Zeit eingestellt werden, um günstige Aufheiz- und Abkühlphasen für das Produkt einzustellen und ungünstige Verzugseffekte oder Gefügeveränderungen zu vermeiden. Die Ofentemperatur wird so gewählt, dass das Bauteil auf eine sinterfähige Temperatur unterhalb der Schmelztemperatur des Materials des Bauteils erhitzt wird. Typische Werte für die Durchführung des heißisostatischen Pressvorgangs sind ein Überdruck von 1000 bar, eine Temperatur von 920 °C und eine heißisostatische Pressdauer von 2 Stunden für die heißisostatische Verpressung von Bauteilen, die zuvor in einem additiven Herstellungsverfahren unter Verwendung eines metallischen Ausgangsmaterials hergestellt worden sind.

Optional kann dem heißisostatischen Pressen in Schritt 7 eine mechanische Nachbearbeitung in einem Schritt 8 folgen. Hierbei wird durch ein mechanisches Bearbeitungsverfahren, beispielsweise ein CAM-gesteuertes Fräsverfahren, eine exakte Geometrie und Oberflächenqualität des Bauteils hergestellt. Das Bauteil kann hierbei anhand der CAD-Daten, die im Schritt 1 für die Erstellung des Fertigungsdatensatzes eingesetzt wurde, bearbeitet werden, indem aus diesen CAD-Daten die CAM-Fertigungsdaten für die mechanische Bearbeitung erstellt werden und hierdurch durch die vorangegangenen Schritte bedingte Schrumpfungs- und Verzugseffekte korrigiert werden.

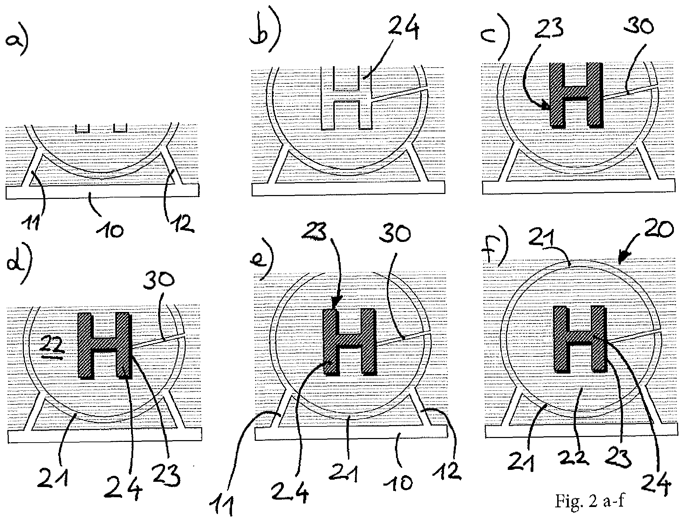

Die Figuren 2a-f zeigen den Ablauf der Herstellung eines Bauteils nach dem erfindungsgemäßen Verfahren in einem additiven Herstellungsprozess. Das Bauteil wird auf einer Substratplatte 10 aufgebaut, von der sich mehrere Stützen 11, 12 erstrecken, die als Hilfs-Stützstruktur dazu dienen, das Bauteil verzugsfrei oberhalb der Substratplatte aufbauen zu können. In einzelnen Fällen kann das Bauteil auch direkt mit der Substratplatte verbunden sein und muss dann nachfolgend von dieser abgetrennt werden.

Die Stützen 11, 12 dienen bei dem erfindungsgemäß hergestellten Bauteil zugleich als Referenzstruktur. An diesen Stützen kann das Bauteil in einem nach dem heißisostatischen Pressvorgang durchgeführten mechanischen Bearbeitungsverfahren eingespannt werden und hierdurch in eine vorbestimmte, definierte Position für die mechanische Bearbeitung platziert und gehalten werden.

Der Aufbau des Bauteils erfolgt schichtweise, indem eine Pulverschicht von oben aufgebracht wird, die Querschnittsanteile des Bauteils, die in dieser Pulverschicht liegen, durch Einwirkung eines Lasers ausgehärtet und mit darunterliegenden Teilen des Bauteils verbunden werden. Hierbei wird der Laser selektiv computergesteuert über die aufgebrachte Pulverschicht geführt. Im Laserfokus schmilzt das Pulvermaterial auf und verbindet sich zu dem Bauteilabschnitt in diesem Bereich. Zugleich wird das aufgeschmolzene Pulver mit einem darunterliegenden Anteil des Bauteils, der in der vorangehend selektiv ausgehärteten Schicht liegt, verbunden.

Das Bauteil 20 weist eine äußere, im dargestellten Querschnitt kreisrunde Hülle 21 auf. In diesem äußeren Hüllbereich wird das Ausgangsmaterial unter hoher Energieeinwirkung des Laserstrahls gasdicht verbunden.

Der Hüllbereich 21 umschließt einen Kernbereich 22. In diesem Kernbereich 22 wird das Ausgangsmaterial mit reduzierter Energieeinwirkung verbunden und weist daher keine hohe mechanische Stabilität auf. Diese reduzierte Energieeinwirkung wird erreicht, indem der Laser mit erhöhter Verfahrgeschwindigkeit über die Bereiche dieses Kernbereichs 22 geführt wird und hierdurch das Fertigungsverfahren zeitlich verkürzt wird. Grundsätzlich könnte im Kernbereich auch auf eine Aushärtung des Ausgangsmaterials mittels des Lasers vollständig verzichtet werden, sodass das Ausgangsmaterial im Kernbereich unverändert bleibt und lediglich vom Hüllbereich 21 umschlossen wird.

Innerhalb des Kernbereichs wird ein zweiter Hüllbereich aufgebaut, der ebenso wie der erste Hüllbereich durch hohe Energieeinwirkung dicht aushärtet und verbunden wird. Dieser zweite Hüllbereich ist in der Querschnittskontur eines Doppel-T-Trägers ausgebildet und dient der mechanischen Versteifung des Bauteils. Innerhalb des zweiten Hüllbereichs ist ein Teilvolumen 24 des Kernbereichs angeordnet. Dieses Teilvolumen 24 wird keiner Aushärtung und Verbindung unterzogen, sodass das Ausgangsmaterial im Teilvolumen unverändert in Pulverform vorliegt.

Ein Druckausgleichskanal 30 verbindet das Teilvolumen 24 mit der Umgebung außerhalb des Hüllbereichs 21. Durch diesen Druckausgleichskanal kann in der späteren heißisostatischen Verpressung der Pressdruck in das Teilvolumen eingeleitet werden, sodass das Teilvolumen als Volumen erhalten bleibt und nicht durch den heißisostatischen Pressvorgang zusammengepresst wird.

Kurz bevor der zweite Hüllbereich 23 vollständig geschlossen wird, wird im Schritt gemäß Fig. 2b das im Teilvolumen 2 angeordnete Ausgangsmaterial entfernt, beispielsweise durch Absaugen des Materials. Anstelle dieses Ausgangsmaterials wird ein anderes Material in das Teilvolumen eingesetzt, wie ersichtlich in Fig. 2c. Grundsätzlich kann auf das Einfüllen eines anderen Ausgangsmaterials auch verzichtet werden, sodass das Teilvolumen 24 als Hohlraum, gasgefüllt, verbleibt.

Bei Fortsetzung des Fertigungsvorgangs in den Schritten Fig.2d bis Fig. 2f wird der zweite Hüllbereich 23 vollständig geschlossen und dadurch das hohle Teilvolumen 24 bzw. das mit dem anderen Ausgangsmaterial gefüllte Teilvolumen 24 abgeschlossen. Weiterhin wird der Kernbereich aufgefüllt und der ersten Hüllbereich 21 ebenfalls geschlossen, womit das Bauteil 20 im additiven Herstellungsprozess vollständig hergestellt worden ist.

Das so hergestellte Bauteil wird von der Substratplatte entfernt, indem die Stützen 11, 12 an ihrem unteren Ende von der Substratplatte abgetrennt werden und kann dann einem heißisostatischen Pressvorgang (HIP) zugeführt werden. Dabei kann, je nachdem ob das Teilvolumen hohl ist, oder gefüllt ist, der Druckausgleichskanal 30 erhalten bleiben, um das hohle Volumen einem Druckausgleich des heißisostatischen Pressdrucks zuzuführen und dadurch als Hohlraum während des HIP-Vorgangs zu erhalten. Der Druckausgleichskanal 30 kann auch vor dem HIP-Vorgangs verschlossen werden, um das Teilvolumen einer Verdichtung und Verfestigung im heißisostatischen Pressvorgang zuzuführen, wenn darin ein anderes Ausgangsmaterial angeordnet wurde.

## Patentansprüche

1. Verfahren zur Herstellung von Bauteilen (20), mit den Schritten:
a) Herstellen eines Bauteilrohlings in einem additiven Herstellungsverfahren, umfassend:
a1) Bestimmen von auszuhärtenden Bauteilbereichen des Bauteilrohlings in einem elektronischen Planungsvorgang und Erzeugen eines Bauteilrohlingsdatensatzes, der die auszuhärtenden Bauteilbereiche definiert,
a2) Anordnen eines Ausgangsmaterials und selektives Aushärten und Fügen des Ausgangsmaterial in den auszuhärtenden Bauteilbereichen anhand des Bauteilrohlingsdatensatzes zu dem Bauteilrohling,
wobei das Aushärten und Fügen des Ausgangsmaterials anhand des Bauteilrohlingsdatensatzes so erfolgt, dass der Bauteilrohling eine Bauteilrohlingsdichte aufweist, die kleiner als 99,5% der theoretisch mit dem Ausgangsmaterial erreichbaren Dichte ist,
b) Verdichten und Verfestigen des Bauteilrohlings zu einem Bauteil in einem hei-ßisosstatischem Pressverfahren, bei dem der Bauteilrohling in einer Ofenkammer auf eine Temperatur unterhalb der Schmelztemperatur des Ausgangsmaterial erhitzt wird und durch Erzeugen eines Überdrucks in der Ofenkammer mittels eines Ofenkammerdrucks von mindestens 50 bar gepresst wird
**dadurch gekennzeichnet, dass** das Erzeugen des Bauteilrohlingsdatensatzes umfasst:
- Bestimmen einer Außengeometrie des Bauteilrohlings
- Bestimmen eines ersten Hüllbereichs (21) und eines Kernbereichs (22) des Bauteilrohlings, wobei der erste Hüllbereich (21) den Kernbereich (22) teilweise oder vollständig umschließt,
- Bestimmen zumindest eines zweiten Hüllbereichs (23) ein Teilvolumen (24) des Kernbereichs (22) umschließt, wobei der zweite Hüllbereich (23) innerhalb des ersten Hüllbereichs (21) liegt,
- Bestimmen eines ersten Wertes eines ersten Fertigungsparameters für den Kernbereich (22),
- Bestimmen eines zweiten Wertes des ersten Fertigungsparameters für den ersten Hüllbereich (21), wobei der zweite Wert verschieden von dem ersten Wert ist,
- Bestimmen eines dritten Wertes des ersten Fertigungsparameters für das Teilvolumen (24), wobei der dritte Wert vorzugsweise übereinstimmend mit dem ersten Wert ist,
und das selektive Aushärten und Fügen des Ausgangsmaterials
- im Kernbereich (22) mit dem ersten Wert des ersten Fertigungsparameters erfolgt und eine erste Dichte im Kernbereich (22)
- im ersten Hüllbereich (21) mit dem zweiten Wert des ersten Fertigungsparameters erfolgt und eine zweite Dichte im ersten Hüllbereich (21) erzeugt, die höher ist als die erste Dichte,
- im Teilvolumen (24) mit dem dritten Wert des ersten Fertigungsparameters erfolgt und eine dritte Dichte im Teilvolumen erzeugt, die vorzugsweise übereinstimmend zur ersten Dichte ist.

2. Verfahren nach Anspruch 1,
**dadurch gekennzeichnet, dass**
das Erzeugen des Bauteilrohlingsdatensatzes in Schritt a1) umfasst:
- Bestimmen einer Außengeometrie des Bauteilrohlings
- Bestimmen eines Hüllbereichs und eines Kernbereichs des Bauteilrohlings, wobei der Hüllbereich den Kernbereich umschließt,
- Bestimmen eines ersten Wertes eines ersten Fertigungsparameters für den Kernbereich, und
- Bestimmen eines zweiten Wertes des ersten Fertigungsparameters für den Hüllbereich, wobei der zweite Wert verschieden von dem ersten Wert ist,
und das selektive Aushärten und Fügen des Ausgangsmaterials in Schritt a2)
- im Kernbereich mit dem ersten Wert des ersten Fertigungsparameters erfolgt und eine erste Dichte im Kernbereich erzeugt,
- im Hüllbereich mit dem zweiten Wert des ersten Fertigungsparameters erfolgt und eine zweite Dichte im Hüllbereich erzeugt, die höher ist als die erste Dichte.

3. Verfahren nach Anspruch 1 oder 2,
**dadurch gekennzeichnet, dass** das Erzeugen des Bauteilrohlingsdatensatzes umfasst:
Bestimmen eines vierten Wertes des ersten Fertigungsparameters für den zweiten Hüllbereich, wobei der vierte Wert vorzugsweise übereinstimmend mit dem zweiten Wert ist,
und das selektive Aushärten und Fügen des Ausgangsmaterials
im zweiten Hüllbereich mit dem vierten Wert des ersten Fertigungsparameters erfolgt und eine vierte Dichte im zweiten Hüllbereich erzeugt, die vorzugsweise übereinstimmend zur zweiten Dichte ist,

4. Verfahren nach einem der vorhergehenden Ansprüche,
**dadurch gekennzeichnet, dass** der dritte Wert des ersten Fertigungsparameters definiert, dass
- im Teilvolumen kein Ausgangsmaterial während des additiven Herstellungsverfahrens angeordnet wird, oder
- im Teilvolumen das Ausgangsmaterial während des additiven Herstellungsverfahrens angeordnet wird, und in einem nachfolgenden Schritt wieder entfernt wird, oder
- im Teilvolumen ein anderes Ausgangsmaterial angeordnet wird als im Kernbereich, oder
- im Teilvolumen das Ausgangsmaterial während des additiven Herstellungsverfahrens angeordnet wird, in einem nachfolgenden Schritt wieder entfernt wird, und das Teilvolumen mit einem zweiten Ausgangsmaterial gefüllt wird, das von dem Ausgangsmaterial im Kernbereich verschieden ist, wobei vorzugsweise während oder nach dem Füllen des zweiten Ausgangsmaterials in das Teilvolumen eine Verdichtung des zweiten Ausgangsmaterials in dem Teilvolumen erfolgt, insbesondere mittels eines Rüttelprozesses des zweiten Ausgangsmaterials.

5. Verfahren nach einem der vorhergehenden Ansprüche, **dadurch gekennzeichnet, dass** die im Schritt a1) definierten auszuhärtenden Bauteilbereiche einen Druckausgleichskanal (30) umfasst, der sich ausgehend von dem ersten Hüllbereich (21) zu dem zweiten Hüllbereich (23) erstreckt und das Teilvolumen (24) mit der Umgebung des Bauteilrohlings für eine Fluiddruckübertragung verbindet.

6. Verfahren nach einem der Ansprüche 2 bis 5,
**dadurch gekennzeichnet, dass**
- der Fertigungsparameter eine Verfahrgeschwindigkeit eines gebündelten Elektronenstrahls ist und der erste Wert kleiner ist als der zweite Wert bzw. der dritte Wert kleiner ist als der vierte Wert, oder
- der Fertigungsparameter eine Strahlungsintensität eines gebündelten Elektronenstrahls ist und der erste Wert größer ist als der zweite Wert bzw. der dritte Wert größer ist als der vierte Wert, oder
- der Fertigungsparameter ein Bahnabstand zwischen zwei nebeneinanderliegenden Rasterbahnen eines gebündelten Elektronenstrahls ist und der erste Wert kleiner ist als der zweite Wert, bzw. der dritte Wert kleiner ist als der vierte Wert, oder
- der Fertigungsparameter eine Dauer einer zur Aushärtung und Verbindung führenden Energieeinwirkung auf das Ausgangsmaterial ist und der erste Wert größer ist als der zweite Wert bzw. der dritte Wert größer ist als der vierte Wert, oder
- der Fertigungsparameter eine Schichtdicke oder eine Tropfengröße beim Aufbringen des Ausgangsmaterials ist, und der erste Wert kleiner ist als der zweite Wert, bzw. der dritte Wert kleiner ist als der vierte Wert, oder
- der Fertigungsparameter eine Materialdefinition ist und der erste Wert, der zweite Wert und/oder der dritte Wert jeweils unterschiedliche Ausgangsmaterialien definieren.

7. Verfahren nach einem der vorhergehenden Ansprüche,
**dadurch gekennzeichnet, dass** das Erzeugen des Bauteilrohlingsdatensatzes in Schritt a1) umfasst:
- Bestimmen einer Außengeometrie des Bauteilrohlings
- Bestimmen eines Hüllbereichs und eines Kernbereichs des Bauteilrohlings, wobei der Hüllbereich den Kernbereich vollständig oder teilweise umschließt, und beim selektiven Aushärten und Fügen des Ausgangsmaterials in Schritt a2)
- das Ausgangsmaterial im Hüllbereich eine zum Aushärten und Fügen führende Bearbeitung durchläuft, und
- das Ausgangsmaterial im Kernbereich nicht eine zum Aushärten und Fügen führende Bearbeitung durchläuft, und
das Verdichten und Verfestigen des Bauteilrohlings in Schritt b) umfasst:
- Aushärten und Fügen des Ausgangsmaterials im Kernbereich.

8. Verfahren nach einem der vorhergehenden Ansprüche,
**dadurch gekennzeichnet, dass** im Schritt a1)
- einer der beiden Werte, ausgewählt aus dem ersten und dem dritten Wert, definiert, dass das Ausgangsmaterial nicht eine zum Aushärten und Fügen führende Bearbeitung durchläuft, und
- der andere der beiden Werte, ausgewählt aus dem ersten und dem dritten Wert, definiert, dass das das Ausgangsmaterial eine zum Aushärten und Fügen führende Bearbeitung durchläuft, und
beim selektiven Aushärten und Fügen des Ausgangsmaterials in Schritt a2)
- das Ausgangsmaterial in dem Bereich, der mit dem einen der beiden Werte ausgehärtet und gefügt wird, nicht eine zum Aushärten und Fügen führende Bearbeitung durchläuft, und
- das Ausgangsmaterial in dem Bereich, der mit dem anderen der beiden Werte ausgehärtet und gefügt wird, eine zum Aushärten und Fügen führende Bearbeitung durchläuft, und
das Verdichten und Verfestigen des Bauteilrohlings in Schritt b) umfasst:
- Aushärten und Fügen des Ausgangsmaterials in dem Bereich, der mit dem einen der beiden Werte ausgehärtet und gefügt wird.

9. Verfahren nach einem der vorhergehenden Ansprüche,
**dadurch gekennzeichnet, dass**
- als Ausgangsmaterial ein beim Aushärten und Fügen sich homogen verhaltendes Material verarbeitet wird, insbesondere ein Pulvermaterial, das aus Pulverpartikeln besteht, wobei alle Pulverpartikel eine übereinstimmende Schmelztemperatur aufweisen und/oder
- das Ausgangsmaterial eine solche Temperaturbeständigkeit aufweist, und der heißisostatische Pressvorgang mit solchen Prozessparametern durchgeführt wird, dass das Gewicht des Bauteilrohlings sich während des heißisostatischen Pressvorgangs nicht verändert.

10. Verfahren nach einem der vorhergehenden Ansprüche,
**dadurch gekennzeichnet, dass** als Ausgangsmaterial ein Pulvermaterial verarbeitet wird, welches Pulverpartikel unterschiedlicher Korngröße aufweisen, wobei die Korngröße
zwischen einer unteren Pulverkorngrößengrenze und einer oberen Pulverkorngrößengrenze liegt und sich über eine Pulverkorngrößenbandbreite, die der oberen Pulverkorngrößengrenze abzüglich der unteren Pulverkorngrößengrenze entspricht, erstreckt,
und wobei ein Gewichtsanteil kleiner Pulverpartikel mit einer Korngröße, die zwischen 10% und 20% der gesamten Pulverkorngrößenbandbreite von der unteren Pulverkorngrößengrenze liegen, mindestens 20 Gew.-% des Pulvermaterials beträgt, und
und wobei ein Gewichtsanteil großer Pulverpartikel mit einer Korngröße, die zwischen 10% und 20% der gesamten Pulverkorngrößenbandbreite von der oberen Pulverkorngrößengrenze liegen, mindestens 20 Gew.-% des Pulvermaterials beträgt,
wobei vorzugsweise die untere Pulverkorngrößengrenze 0, 10 oder 20µm und die obere Pulverkorngrößengrenze 40, 50 oder 75µm beträgt.

11. Verfahren nach einem der vorhergehenden Ansprüche,
**dadurch gekennzeichnet, dass** als Ausgangsmaterial ein Pulvermaterial verarbeitet wird, und das selektive Aushärten und Fügen des Ausgangsmaterials die Schritte umfasst:
a) Auftragen einer Pulverschicht auf eine Oberfläche einer Substratplatte (10) oder eines vorgefertigten Bauteils mittels einer Pulverauftragsvorrichtung,
b) Selektives Aushärten der auszuhärtenden Bauteilbereiche in der aufgetragenen Pulverschicht und Verbinden der auszuhärtenden Bauteilbereiche mit der darunterliegenden Substratplatte durch Energieeinwirkung, insbesondere Einwirkung einer elektromagnetischen Strahlung, zum Erzeugen von entsprechend ausgehärteten Bauteilbereichen,
c) Auftragen einer weiteren Pulverschicht auf die zuvor aufgetragene Pulverschicht mittels der Pulverauftragsvorrichtung,
d) Selektives Aushärten der auszuhärtenden Bauteilbereiche in der aufgetragenen weiteren Pulverschicht und Verbinden der auszuhärtenden Bauteilbereiche mit den ausgehärteten Bauteilbereichen der darunterliegenden Pulverschicht durch Energie-einwirkung, insbesondere Einwirkung einer elektromagnetischen Strahlung,
- Mehrfaches Wiederholen der Schritte c) und d) zum schichtweisen Aufbau des Bauteils
- wobei vorzugsweise nach zumindest einem Schritt des Auftragens einer Pulverschicht in Schritt a) und Schritt c), vorzugsweise jedem zweiten oder jedem Schritt des Auftragens einer Pulverschicht eine Verdichtung der Pulverschicht erfolgt, und die Verdichtung der Pulverschicht vorzugsweise mittels eines Rüttelprozesses der Pulverschicht erfolgt.

12. Verfahren nach einem der vorhergehenden Ansprüche,
**dadurch gekennzeichnet, dass** beim Erzeugen des Bauteilrohlingsdatensatzes das Bestimmen der Außengeometrie des Bauteilrohlings umfasst:
- Bestimmen einer Produktgeometrie und einer an der Produktgeometrie angeordneten Referenzstruktur, die als äußere Oberfläche der Produktgeometrie hinzugefügt ist,
- Bestimmen eines Bearbeitungszuschlagsvolumens, welches in zumindest einem Teilbereich an die Produktgeometrie angelagert ist,
- Verbinden der Produktgeometrie, des Bearbeitungszuschlagsvolumens und der Referenzstruktur zu der Außengeometrie des Bauteilrohlings,
und dass nach dem Verdichten und Verfestigen des Bauteils ein mechanischer Präzisionsbearbeitungsschritt ausgeführt wird, umfassend:
- Definiertes Positionieren des verdichteten und verfestigten Bauteils in einem Bearbeitungsbereich einer materialentfernenden Bearbeitungsvorrichtung, wobei die Referenzstruktur
o als Messpunkt- oder -Messfläche zur definierten Positionierung des Bauteils in dem Bearbeitungsraum dient oder
o als Spannpunkt oder Spannfläche einer Spannvorrichtung der materialentfernenden Bearbeitungsvorrichtung dient,
- Entfernen von Material im Bereich des Bearbeitungszuschlagsvolumens mittels einer materialentfernenden Fertigungsmethode, insbesondere einer spanenden Fertigungsmethode in der materialentfernenden Bearbeitungsvorrichtung,
- und dass nach dem Präzisionsbearbeitungsschritt die Referenzstruktur entfernt wird.

13. Verfahren nach einem der vorhergehenden Ansprüche,
**dadurch gekennzeichnet, dass** beim Verdichten und Verfestigen des Bauteilrohlings zu einem Bauteil der Bauteilrohling mit einem Hüllmaterial umhüllt wird, wobei das Hüllmaterial vorzugsweise eine metallische Folie, wie eine Edelstahlfolie ist.

14. Verfahren nach einem der vorhergehenden Ansprüche,
**dadurch gekennzeichnet, dass** beim Erzeugen des Bauteilrohlingsdatensatzes das Bestimmen der Außengeometrie des Bauteilrohlings umfasst:
- Bestimmen einer Sollgeometrie,
- Bestimmen eines Schrumpfungsvolumens, welches eine bei dem Verdichten und Verfestigen des Bauteilrohlings auftretende Schrumpfung als ein der Bauteilrohlingsgeometrie zuzuschlagendes Rohbauteilvolumen definiert, durch welches das aus dem Bauteilrohling nach dem Verdichten und Verfestigen hervorgegangene Bauteil die Sollgeometrie aufweist, und/oder
- Bestimmen eines Verzugsvolumens, welches eine bei dem selektiven Aushärten und Fügen des Bauteilrohlings und/oder bei dem Verdichten und Verfestigen des Bauteilrohlings auftretenden Verzug als ein der Bauteilrohlingsgeometrie zuzuschlagendes Rohbauteilvolumen definiert, durch welches das Rohbauteil nach dem Verdichten und Verfestigen die Sollgeometrie aufweist,
- Erzeugen des Bauteilrohlingsdatensatzes aus der Sollgeometrie und einem aus dem Schrumpfungsvolumen und/oder dem Verzugsvolumen bestimmten Korrekturdatensatz,
wobei der Korrekturdatensatz vorzugsweise ermittelt wird, indem
- In einem ersten Fertigungsschritt ein Bauteil erzeugt wird, bei dem der Bauteilrohdatensatz der einem die Sollgeometrie eines Produkts beschreibenden Soll-Geometriedatensatz entspricht,
- Nach dem Verdichten und Verfestigen des im ersten Fertigungsschritt hergestellten Bauteil die Ist-Geometrie des Bauteils mittels einer elektronischen Messvorrichtung vermessen wird und hierbei ein dreidimensionaler Ist-Geometriedatensatz erstellt wird,
- Aus einem Vergleich der gemessenen Ist-Geometrie des Bauteils und dem Soll-Geometriedatensatz ein Differenz-Geometriedatensatz berechnet wird, und
- Aus dem Differenz-Geometriedatensatz der Korrekturdatensatz berechnet wird, wobei der Differenz-Geometriedatensatz vorzugsweise mit einem Faktor zwischen 1 und 1,2 multipliziert wird und hierdurch der Differenz-Geometriedatensatz bestimmt wird.

15. Verfahren nach einem der vorhergehenden Ansprüche,
**dadurch gekennzeichnet, dass** beim Verdichten und Verfestigen gemäß Schritt b) die Ofenkammer
- mit mindestens einem Rohbauteil, das nach einem der Schritte a1) und a2) hergestellt wurde und das zum Erreichen einer Verdichtung und Verfestigung einen heißisostatischen Pressvorgang mit einem ersten Parametersatz, umfassend einen ersten Pressdruck, eine erste Presstemperatur und eine erste Pressdauer, erfordert, und
- mit mindestens einem Bauteil, dass durch ein Gussverfahren hergestellt wurde und das zum Erreichen einer Verdichtung und Verfestigung einen hei-ßisostatischen Pressvorgang mit einem zweiten Parametersatz, umfassend einen zweiten Pressdruck, eine zweite Presstemperatur und eine zweite Pressdauer,
beschickt wird und das Verdichten und Verfestigen mit einem dritten Parametersatz durchgeführt wird, der als Pressdruck den höheren Pressdruck des ersten und zweiten Pressdrucks, als Presstemperatur die höhere der ersten und zweiten Presstemperatur und als Pressdauer die längere der ersten und zweiten Pressdauer umfasst.

## Claims

1. Method of manufacturing components (20), comprising the steps:
a) Producing a component blank in an additive manufacturing process, comprising:
a1) Determining component areas of the component blank to be cured in an electronic planning process and generating a component blank data set defining the component areas to be cured,
a2) arranging a raw material and selectively curing and joining the raw material in the component areas to be cured using the component blank data set to the component blank,
wherein the curing and joining of the raw material is performed using the component blank data set such that the component blank has a component blank density that is less than 99.5% of the density theoretically achievable with the raw material,
b) compacting and solidifying the component blank into a component in a hot isostatic pressing process, in which the component blank is heated in a furnace chamber to a temperature below the melting temperature of the raw material and is pressed by generating an overpressure in the furnace chamber by means of a furnace chamber pressure of at least 50 bar
**characterised in that** generating the component blank data set comprises:
- Determining an external geometry of the component blank
- defining a first envelope region (21) and a core region (22) of the component blank, the first envelope region (21) partially or completely enclosing the core region (22),
- defining at least a second envelope region (23) enclosing a partial volume (24) of the core region (22), the second envelope region (23) lying within the first envelope region (21),
- determining a first value of a first manufacturing parameter for the core region (22),
- determining a second value of the first manufacturing parameter for the first envelope region (21), the second value being different from the first value,
- determining a third value of the first manufacturing parameter for the partial volume (24), the third value preferably being the same as the first value,
and the selective curing and joining of the raw material
- is conducted in the core region (22) using the first value of the first manufacturing parameter and produces a first density in the core region (22),
- is conducted in the first envelope region (21) using the second value of the first manufacturing parameter and produces a second density in the first envelope region (21) that is higher than the first density,
- is conducted in the partial volume (24) using the third value of the first manufacturing parameter and produces a third density in the partial volume, which is preferably identical to the first density.

2. Method according to claim 1,
**characterised in that**
generating the component blank data set in step a1) comprises:
- determining an outer geometry of the component blank
- defining an envelope region and a core region of the component blank, the envelope region enclosing the core region,
- determining a first value of a first manufacturing parameter for the core region, and
- determining a second value of the first manufacturing parameter for the envelope region, the second value being different from the first value,
and the selective curing and joining of the raw material in step a2)
- is conducted in the core region using the first value of the first manufacturing parameter and produces a first density in the core region,
- is conducted in the envelope region using the second value of the first manufacturing parameter and produces a second density in the envelope region that is higher than the first density.

3. Method according to claim 1 or 2,
**characterised in that** generating the component blank data set comprises:
determining a fourth value of the first manufacturing parameter for the second envelope region, the fourth value preferably being coincident with the second value,
and the selective curing and joining of the raw material is conducted in the second envelope region using the fourth value of the first manufacturing parameter and produces a fourth density in the second envelope region, which is preferably identical to the second density,

4. Method according to any one of the preceding claims,
**characterised in that** the third value of the first manufacturing parameter defines that
- no raw material is placed in the partial volume during the additive manufacturing process, or
- the raw material is placed in the partial volume during the additive manufacturing process and is removed again in a subsequent step, or
- a different raw material is arranged in the partial volume than in the core region, or
- the raw material is arranged in the partial volume during the additive manufacturing process, is removed again in a subsequent step, and the partial volume is filled with a second raw material which is different from the raw material in the core region, wherein preferably during or after the filling of the second raw material into the partial volume a compression of the second raw material takes place in the partial volume, in particular by means of a vibrating process of the second raw material.

5. Method according to any one of the preceding claims,
**characterised in that** the component regions to be cured defined in step a1) comprise a pressure equalisation channel which extends from the first envelope region (21) to the second envelope region (23) and connects the partial volume (24) to the environment of the component blank for fluid pressure transfer.

6. Method according to any one of claims 2 to 5,
**characterised in that**
- the manufacturing parameter is a traversing velocity of a collimated electron beam and the first value is smaller than the second value or the third value is smaller than the fourth value, or
- the manufacturing parameter is a radiation intensity of a focused electron beam and the first value is greater than the second value or the third value is greater than the fourth value, or
- the manufacturing parameter is a path distance between two adjacent raster paths of a focused electron beam and the first value is smaller than the second value, or the third value is smaller than the fourth value, or
- the manufacturing parameter is a duration of an energy effect on the raw material leading to curing and bonding and the first value is greater than the second value or the third value is greater than the fourth value, or
- the manufacturing parameter is a layer thickness or a drop size when applying the raw material, and the first value is smaller than the second value, or the third value is smaller than the fourth value, or
- the manufacturing parameter is a material definition and the first value, the second value and/or the third value each define different raw materials.

7. Method according to any one of the preceding claims,
**characterised in that** the generation of the component blank data set comprises in step a1):
- Determining an external geometry of the component blank
- defining an envelope region and a core region of the component blank, wherein the envelope region completely or partially encloses the core region,
and during selective curing and joining of the raw material in step a2)
- the raw material in the envelope region undergoes processing leading to hardening and joining, and
- the raw material in the core region does not undergo processing leading to hardening and joining, and
the compacting and solidification of the component blank in step b) comprises:
- hardening and joining of the raw material in the core region.

8. Method according to any one of the preceding claims,
**characterised in that** in step a1)
- one of the two values selected from the first and the third value defines that the raw material does not undergo a processing leading to hardening and joining, and
- the other of the first and third values defines that the raw material undergoes processing leading to curing and joining, and
during selective curing and joining of the raw material in step a2)
- the raw material in the area which is cured and joined with one of the two values does not undergo any processing leading to curing and joining, and
- the raw material in the area which is cured and joined with the other of the two values undergoes processing leading to curing and joining, and
the compacting and solidification of the component blank in step b) comprises:
- Curing and joining of the raw material in the area that is cured and joined with one of the two values.

9. Method according to any one of the preceding claims,
**characterised in that**
- a material which behaves homogeneously during curing and joining is processed as the raw material, in particular a powder material which consists of powder particles, all the powder particles having the same melting temperature and/or
- the raw material has such a temperature resistance, and the hot isostatic pressing process is carried out with such process parameters that the weight of the component blank does not change during the hot isostatic pressing process.

10. Method according to any one of the preceding claims,
**characterised in that** a powder material is processed as the raw material, which powder material has powder particles of different particle size, wherein the particle size
lies between a lower powder particle size limit and an upper powder particle size limit and extends over a powder particle size bandwidth corresponding to the upper powder particle size limit minus the lower powder particle size limit,
and wherein a weight fraction of small powder particles having a particle size ranging from 10% to 20% of the total powder particle size range from the lower powder particle size limit is at least 20% by weight of the powder material, and
and wherein a weight fraction of large powder particles having a particle size ranging from 10% to 20% of the total powder particle size range from the upper powder particle size limit is at least 20% by weight of the powder material,
wherein preferably the lower powder particle size limit is 0, 10 or 20 µm and the upper powder particle size limit is 40, 50 or 75µm.

11. Method according to any one of the preceding claims,
**characterised in that** a powder material is processed as the raw material, and the selective curing and joining of the raw material comprises the steps of:
a) Application of a powder layer to a surface of a substrate plate (10) or a prefabricated component by means of a powder application device,
b) Selective curing of the component regions to be cured in the applied powder layer and bonding of the component regions to be cured to the substrate plate underneath by the action of energy, in particular the action of electromagnetic radiation, to produce correspondingly cured component regions,
c) Application of a further powder layer on top of the previously applied powder layer by means of the powder application device,
d) selective curing of the component areas to be cured in the applied further powder layer and bonding of the component areas to be cured with the cured component areas of the underlying powder layer by the action of energy, in particular the action of electromagnetic radiation,
- Repeat steps c) and d) several times to build up the component layer by layer.
- preferably after at least one powder layer application step in step a) and step c), preferably every second or every powder layer application step, a compaction of the powder layer is performed, and the compaction of the powder layer is preferably performed by means of a shaking process of the powder layer.

12. Method according to any one of the preceding claims,
**characterised in that** generating the component blank data set comprises determining the external geometry of the component blank:
- Determining a product geometry and a reference structure located on the product geometry, which is added as an outer surface of the product geometry,
- Determining a machining allowance volume which is attached to the product geometry in at least one partial area,
- Connecting the product geometry, the machining allowance volume and the reference structure to the outer geometry of the component blank,
and **in that** a precision mechanical machining step is carried out after compacting and solidifying the component, comprising:
- defined positioning of the compacted and solidified component in a machining area of a material-removing machining device, wherein the reference structure
o serves as a measuring point or measuring surface for the defined positioning of the component in the machining area or
o serves as a clamping point or clamping surface of a clamping device of the material-removing processing device,
- Removing material in the area of the machining allowance volume by means of a material-removing manufacturing method, in particular a cutting manufacturing method in the material-removing machining device,
- and that after the precision machining step, the reference structure is removed.

13. Method according to any one of the preceding claims,
**characterised in that** during compaction and solidification of the component blank into a component, the component blank is wrapped with a wrapping material, the wrapping material preferably being a metallic foil, such as a stainless steel foil.

14. Method according to any one of the preceding claims,
**characterised in that** generating the component blank data set comprises determining the external geometry of the component blank:
- Determining a target geometry,
- determining a shrinkage volume which defines a shrinkage occurring during the compacting and solidification of the component blank as a blank volume to be added to the component blank geometry, by which the component produced from the component blank after the compacting and solidification has the target geometry, and/or
- determining a distortion volume which defines a distortion occurring during the selective curing and joining of the component blank and/or during the compacting and solidification of the component blank as a blank volume to be added to the component blank geometry, by which the blank has the target geometry after the compacting and solidification,
- generating the part blank data set from the target geometry and a correction data set determined from the shrinkage volume and/or the distortion volume,
wherein the correction data set is preferably determined by
- In a first manufacturing step, a component is created in which the component raw data set corresponds to a target geometry data set describing the target geometry of a product,
- After compacting and solidifying the component produced in the first manufacturing step, the actual geometry of the component is measured by means of an electronic measuring device and a three-dimensional actual geometry data set is created,
- a difference geometry data set is calculated from a comparison of the measured actual geometry of the component and the target geometry data set, and
- calculating the correction data set from the difference geometry data set, preferably multiplying the difference geometry data set by a factor between 1 and 1.2 and thereby determining the difference geometry data set.

15. Method according to any one of the preceding claims,
**characterised in that** during compaction and solidification according to step b) the furnace chamber is filled with
- at least one blank which has been produced according to one of steps a1) and a2) and which, in order to achieve compaction and solidification, requires a hot isostatic pressing operation with a first set of parameters comprising a first pressing pressure, a first pressing temperature and a first pressing duration, and
- at least one component which has been produced by a casting process and which, in order to achieve compaction and solidification, undergoes a hot isostatic pressing process with a second set of parameters comprising a second pressing pressure, a second pressing temperature and a second pressing duration,
and the compacting and solidification is carried out with a third set of parameters comprising as the pressing pressure the higher of the first and second pressing pressures, as the pressing temperature the higher of the first and second pressing temperatures and as the pressing duration the longer of the first and second pressing durations.

## Revendications

1. Procédé de fabrication de composants (20), avec les étapes suivantes :
a) la fabrication d'une ébauche de composant dans un procédé de fabrication additive, comprenant :
a1) la détermination de zones de composant à durcir de l'ébauche de composant dans un processus de planification électronique et la génération d'un jeu de données d'ébauche de composant qui définit les zones de composant à durcir,
a2) l'agencement d'un matériau de départ et le durcissement et l'assemblage sélectifs du matériau de départ dans les zones de composant à durcir à l'aide du jeu de données d'ébauche de composant en l'ébauche de composant,
dans lequel le durcissement et l'assemblage du matériau de départ sont effectués à l'aide du jeu de données d'ébauche de composant de sorte que l'ébauche de composant présente une densité d'ébauche de composant qui est inférieure à 99,5 % à la densité atteignable théoriquement avec le matériau de départ,
b) la compression et la solidification de l'ébauche de composant en un composant dans un procédé de compression isostatique à température élevée, pour lequel l'ébauche de composant est chauffée dans une chambre de four à une température inférieure à la température de fusion du matériau de départ et est pressée par génération d'une surpression dans la chambre de four au moyen d'une pression de chambre de four d'au moins 50 bars,
**caractérisé en ce que** la génération du jeu de données d'ébauche de composant comporte :
- la détermination d'une géométrie extérieure de l'ébauche de composant,
- la détermination d'une première zone d'enveloppe (21) et d'une zone de noyau (22) de l'ébauche de composant, dans lequel la première zone d'enveloppe (21) entoure partiellement ou complètement la zone de noyau (22),
- la détermination au moins d'une seconde zone d'enveloppe (23) qui entoure un volume partiel (24) de la zone de noyau (22), dans lequel la seconde zone d'enveloppe (23) se trouve dans la première zone d'enveloppe (21),
- la détermination d'une première valeur d'un premier paramètre de fabrication pour la zone de noyau (22),
- la détermination d'une deuxième valeur du premier paramètre de fabrication pour la première zone d'enveloppe (21), dans lequel la deuxième valeur est différente de la première valeur,
- la détermination d'une troisième valeur du premier paramètre de fabrication pour le volume partiel (24), dans lequel la troisième valeur est de préférence coïncidente avec la première valeur,
et le durcissement et l'assemblage sélectifs du matériau de départ
- sont effectués dans la zone de noyau (22) avec la première valeur du premier paramètre de fabrication et génère une première densité dans la zone de noyau (22),
- sont effectués dans la première zone d'enveloppe (21) avec la deuxième valeur du premier paramètre de fabrication et génère une deuxième densité dans la première zone d'enveloppe (21) qui est supérieure à la première densité,
- sont effectués dans le volume partiel (24) avec la troisième valeur du premier paramètre de fabrication et génère une troisième densité dans le volume partiel qui est de préférence coïncidente avec la première densité.

2. Procédé selon la revendication 1,
**caractérisé en ce que**
la génération du jeu de données d'ébauche de composant dans l'étape a1) comporte :
- la détermination d'une géométrie extérieure de l'ébauche de composant,
- la détermination d'une zone d'enveloppe et d'une zone de noyau de l'ébauche de composant, dans lequel la zone d'enveloppe entoure la zone de noyau,
- la détermination d'une première valeur d'un premier paramètre de fabrication pour la zone de noyau, et
- la détermination d'une deuxième valeur du premier paramètre de fabrication pour la zone d'enveloppe, dans lequel la deuxième valeur est différente de la première valeur,
et le durcissement et l'assemblage sélectifs du matériau de départ dans l'étape a2)
- sont effectués dans la zone de noyau avec la première valeur du premier paramètre de fabrication et génère une première densité dans la zone de noyau,
- sont effectués dans la zone d'enveloppe avec la deuxième valeur du premier paramètre de fabrication et génère une deuxième densité dans la zone d'enveloppe qui est supérieure à la première intensité.

3. Procédé selon la revendication 1 ou 2,
**caractérisé en ce que** la génération du jeu de données d'ébauche de composant comporte :
la détermination d'une quatrième valeur du premier paramètre de fabrication pour la seconde zone d'enveloppe, dans lequel la quatrième valeur est de préférence coïncidente avec la deuxième valeur ;
et le durcissement et l'assemblage sélectifs du matériau de départ sont effectués dans la seconde zone d'enveloppe avec la quatrième valeur du premier paramètre de fabrication et génère une quatrième densité dans la seconde zone d'enveloppe qui est de préférence coïncidente avec la seconde densité.

4. Procédé selon l'une des revendications précédentes,
**caractérisé en ce que** la troisième valeur du premier paramètre de fabrication définit que
- aucun matériau de départ n'est agencé pendant le procédé de fabrication additive dans le volume partiel, ou
- le matériau de départ est agencé pendant le procédé de fabrication additive dans le volume partiel, et est de nouveau retiré dans une étape suivante, ou
- un autre matériau de départ que celui dans la zone de noyau est agencé dans le volume partiel, ou
- le matériau de départ est agencé pendant le procédé de fabrication additive dans le volume partiel, est de nouveau retiré dans une étape suivante, et le volume partiel est rempli avec un second matériau de départ qui est différent du matériau de départ dans la zone de noyau, dans lequel de préférence pendant ou après le remplissage du second matériau de départ dans le volume partiel, une compression du second matériau de départ dans le volume partiel est effectuée, en particulier au moyen d'un processus de secouage du second matériau de départ.

5. Procédé selon l'une des revendications précédentes,
**caractérisé en ce que** les zones de composant à durcir définies dans l'étape a1) comportent un canal de compensation de pression (30) qui s'étend à partir de la première zone d'enveloppe (21) à la seconde zone d'enveloppe (23) et relie le volume partiel (24) à l'environnement de l'ébauche de composant pour une transmission de pression de fluide.

6. Procédé selon l'une des revendications 2 à 5,
**caractérisé en ce que**
- le paramètre de fabrication est une vitesse de déplacement d'un faisceau électronique en botte et la première valeur est inférieure à la deuxième valeur ou la troisième valeur est inférieure à la quatrième valeur, ou
- le paramètre de fabrication est une intensité de rayonnement d'un faisceau électronique en botte et la première valeur est supérieure à la deuxième valeur ou la troisième valeur est supérieure à la quatrième valeur, ou
- le paramètre de fabrication est une distance de bande entre deux bandes de trame se trouvant côte à côte d'un faisceau électronique en botte et la première valeur est inférieure à la deuxième valeur, ou la troisième valeur est inférieure à la quatrième valeur, ou
- le paramètre de fabrication est une durée d'une action d'énergie menant au durcissement et à la liaison sur le matériau de départ et la première valeur est supérieure à la deuxième valeur ou la troisième valeur est supérieure à la quatrième valeur, ou
- le paramètre de fabrication est une épaisseur de couche ou une dimension de goutte lors de l'application du matériau de départ, et la première valeur est inférieure à la deuxième valeur, ou la troisième valeur est inférieure à la quatrième valeur, ou
- le paramètre de fabrication est une définition de matériau et la première valeur, la deuxième valeur et/ou la troisième valeur définissent respectivement différents matériaux de départ.

7. Procédé selon l'une des revendications précédentes,
**caractérisé en ce que** la génération du jeu de données d'ébauche de composant dans l'étape a1) comporte :
- la détermination d'une géométrie extérieure de l'ébauche de composant,
- la détermination d'une zone d'enveloppe et d'une zone de noyau de l'ébauche de composant, dans lequel la zone d'enveloppe entoure complètement ou partiellement la zone de noyau et lors du durcissement et de l'assemblage sélectifs du matériau de départ dans l'étape a2)
- le matériau de départ passe dans la zone d'enveloppe par un usinage menant au durcissement et à l'assemblage, et
- le matériau de départ dans la zone de noyau ne passe pas par un usinage menant au durcissement et à l'assemblage, et
la compression et la solidification de l'ébauche de composant dans l'étape b) comporte :
- le durcissement et l'assemblage du matériau de départ dans la zone de noyau.

8. Procédé selon l'une des revendications précédentes,
**caractérisé en ce que** dans l'étape a1)
- une des deux valeurs, sélectionnées à partir de la première et de la troisième valeur, définit que le matériau de départ ne passe pas par un usinage menant au durcissement et à l'assemblage, et
- l'autre des deux valeurs, sélectionnées à partir de la première et de la troisième valeur, définit que le matériau de départ passe par un usinage menant au durcissement et à l'assemblage, et
lors du durcissement et de l'assemblage sélectifs du matériau de départ dans l'étape a2)
- le matériau de départ dans la zone qui est durcie et assemblée avec l'une des deux valeurs, ne passe pas par un usinage menant au durcissement et à l'assemblage, et
- le matériau de départ dans la zone qui est durcie et assemblée avec l'autre des deux valeurs, passe par un usinage menant au durcissement et à l'assemblage, et
la compression et la solidification de l'ébauche de composant dans l'étape b) comporte :
- le durcissement et l'assemblage du matériau de départ dans la zone qui est durcie et assemblée avec l'une des deux valeurs.

9. Procédé selon l'une des revendications précédentes,
**caractérisé en ce que**
- un matériau se comportant de manière homogène lors du durcissement et de l'assemblage est traité comme matériau de départ, en particulier un matériau de poudre qui se compose de particules de poudre, dans lequel toutes les particules de poudre présentent une température de fusion coïncidente et/ou
- le matériau de départ présente une telle résistance à la température, et le processus de compression isostatique à température élevée est réalisé avec de tels paramètres de processus que le poids de l'ébauche de composant ne se modifie pas pendant le processus de compression isostatique à température élevée,

10. Procédé selon l'une des revendications précédentes,
**caractérisé en ce qu'**un matériau de poudre est traité comme matériau de départ, lequel présente des particules de poudre de différente grosseur de grains, dans lequel la grosseur de grains se trouve entre une limite de grosseur de grains de poudre inférieure et une limite de grosseur de grains de poudre supérieure et s'étend sur une largeur de bande de grosseur de grains de poudre qui correspond à la limite de grosseur de grains de poudre supérieure moins la limite de grosseur de grains de poudre inférieure,
et dans lequel une part de poids de petites particules de poudre avec une grosseur de grains qui se trouvent entre 10 % et 20 % de la largeur de bande de grosseur de grains de poudre entière depuis la limite de grosseur de grains de poudre inférieure, s'élève au moins à 20 % en poids du matériau de poudre, et
et dans lequel une part de poids de grandes particules de poudre avec une grosseur de grains qui se trouvent entre 10 % et 20 % de la largeur de bande de grosseur de grains de poudre entière depuis la limite de grosseur de grains de poudre supérieure, s'élève au moins à 20 % en poids du matériau de poudre,
dans lequel de préférence, la limite de grosseur de grains de poudre inférieure s'élève à 0, 10 ou 20 µm et la limite de grandeur de poudre de poudre supérieure s'élève à 40, 50 ou 75 µm.

11. Procédé selon l'une des revendications précédentes,
**caractérisé en ce qu'**un matériau de poudre est traité comme matériau de départ, et le durcissement et l'assemblage sélectifs du matériau de départ comporte les étapes suivantes :
a) l'application d'une couche de poudre sur une surface d'une plaque de substrat (10) ou d'un composant préfabriqué au moyen d'un dispositif d'application de poudre,
b) le durcissement sélectif des zones de composant à durcir dans la couche de poudre appliquée et la liaison des zones de composant à durcir avec la plaque de substrat se trouvant dessous par l'action d'énergie, en particulier l'action d'un rayonnement électromagnétique, pour la génération de zones de composant durcies de manière correspondante,
c) l'application d'une autre couche de poudre sur la couche de poudre appliquée précédemment au moyen du dispositif d'application de poudre,
d) le durcissement sélectif des zones de composant à durcir dans l'autre couche de poudre appliquée et la liaison des zones de composant à durcir avec les zones de composant durcies de la couche de poudre se trouvant dessous par l'action d'énergie, en particulier l'action d'un rayonnement électromagnétique,
- la répétition multiple des étapes c) et d) pour la structure par couche du composant,
- dans lequel de préférence après au moins une étape de l'application d'une couche de poudre dans l'étape a) et l'étape c), de préférence à chaque seconde ou chaque étape de l'application d'une couche de poudre, une compression de la couche de poudre est effectuée, et la compression de la couche de poudre est de préférence effectuée au moyen d'un processus de secouage de la couche de poudre.

12. Procédé selon l'une des revendications précédentes,
**caractérisé en ce que**, lors de la génération du jeu de données d'ébauche de composant, la détermination de la géométrie extérieure de l'ébauche de composant comporte :
- la détermination d'une géométrie de produit et d'une structure de référence agencée sur la géométrie de produit, qui est ajoutée comme surface extérieure à la géométrie de produit,
- la détermination d'un volume supplémentaire d'usinage qui est fixé dans au moins une zone partielle à la géométrie de produit,
- la liaison de la géométrie de produit, du volume supplémentaire d'usinage et de la structure de référence à la géométrie extérieure de l'ébauche de composant,
et que, après la compression et la solidification du composant, une étape d'usinage de précision mécanique est réalisée, comprenant :
- le positionnement défini du composant compressé et solidifié dans une zone d'usinage d'un dispositif d'usinage retirant du matériau, dans lequel la structure de référence
-- sert de point de mesure ou de surface de mesure pour le positionnement défini du composant dans l'espace d'usinage ou
-- sert de point de serrage ou de surface de serrage d'un dispositif de serrage du dispositif d'usinage retirant du matériau,
- le retrait de matériau dans la zone de volume supplémentaire d'usinage au moyen d'une méthode de fabrication retirant du matériau, en particulier d'une méthode de fabrication par enlèvement de copeaux dans le dispositif d'usinage retirant du matériau,
- et que la structure de référence est retirée après l'étape d'usinage de précision.

13. Procédé selon l'une des revendications précédentes,
**caractérisé en ce que**, lors de la compression et de la solidification de l'ébauche de composant en un composant, l'ébauche de composant est enveloppée avec un matériau d'enveloppe, dans lequel le matériau d'enveloppe est de préférence une feuille métallique, comme une feuille d'acier spécial.

14. Procédé selon l'une des revendications précédentes,
**caractérisé en ce que**, lors de la génération du jeu de données d'ébauche de composant, la détermination de la géométrie extérieure de l'ébauche de composant comporte :
- la détermination d'une géométrie de consigne,
- la détermination d'un volume de retrait qui définit un retrait survenant lors de la compression et de la solidification de l'ébauche de composant comme un volume de composant brut à ajouter à la géométrie d'ébauche de composant, par lequel le composant provenant de l'ébauche de composant après la compression et la solidification présente la géométrie de consigne, et/ou
- la détermination d'un volume de déformation qui définit une déformation survenant lors du durcissement et de l'assemblage sélectifs de l'ébauche de composant et/ou lors de la compression et de la solidification du composant comme un volume de composant brut à ajouter à la géométrie d'ébauche de composant, par lequel le composant brut présente, après la compression et la solidification, la géométrie de consigne,
- la génération du jeu de données d'ébauche de composant à partir de la géométrie de consigne et d'un jeu de données de correction déterminé à partir du volume de retrait et/ou du volume de déformation,
dans lequel le jeu de données de correction est de préférence calculé, **en ce que**
- dans une première étape de fabrication, un composant est généré, pour lequel le jeu de données brut de composant correspond au jeu de données de géométrie de consigne décrivant la géométrie de consigne d'un produit,
- après la compression et la solidification du composant fabriqué dans la première étape de fabrication, la géométrie réelle du composant est mesurée au moyen d'un dispositif de mesure électronique et, par là même, un jeu de données de géométrie réelle tridimensionnel est établi,
- un jeu de données de géométrie différentiel est calculé à partir d'une comparaison de la géométrie réelle mesurée du composant et du jeu de données de géométrie de consigne, et
- le jeu de données de correction est calculé à partir du jeu de données de géométrie différentiel, dans lequel le jeu de données de géométrie de différentiel est de préférence multiplié par un facteur entre 1 et 1,2 et, par là même, le jeu de données de géométrie différentiel est déterminé.

15. Procédé selon l'une des revendications précédentes,
**caractérisé en ce que**, lors de la compression et de la solidification selon l'étape b), la chambre de four est chargée
- avec au moins un composant brut qui a été fabriqué selon l'une des étapes a1) et a2) et qui nécessite, pour l'atteinte d'une compression et d'une solidification d'un processus de compression isostatique à température élevée avec un premier jeu de paramètres comprenant une première pression de pressage, une première température de pressage et une première durée de pressage, et
- avec au moins un composant qui a été fabriqué après un processus de coulage et qui nécessite, pour l'atteinte d'une compression et d'une solidification d'un processus de compression isostatique à température élevée avec un deuxième jeu de paramètres, comprenant une seconde pression de pressage, une seconde température de pressage et une seconde durée de pressage,
et la compression et la solidification sont réalisées avec un troisième jeu de paramètres qui comporte, comme pression de pressage, la pression de pressage la plus élevée des première et seconde pressions de pressage, comme température de pressage, la plus élevée des première et seconde températures de pressage et, comme durée de pressage, la plus longue des première et seconde durées de pressage.
